# EUROPEAN PATENT APPLICATION

(11) **EP 4 250 031 A1**
(43) Date of publication of application: **27.09.2023**
(21) Application number: 22163626.9
(22) Date of filing: 22.03.2022
(51) Int. Cl.: G05B 19/418, G05B 23/02, G02B 27/01

(54) **AN AUGMENTED REALITY BASED AUTOMATION SYSTEM WITH A HANDS FREE SELECTION OF A VIRTUAL OBJECT**

(71) Applicant: BASF SE, 67056 Ludwigshafen am Rhein (DE)
(72) Inventor: Hartmann, Michael, 49448 Lemfoerde (DE); Rudolf , Hans, 49448 Lemfoerde (DE)
(74) Representative: BASF IP Association

(57) **Abstract**

An automation system for controlling an automated production process of an industrial plant is provided. The industrial plant includes a plurality of equipment for performing the production process, where each equipment of the plurality of equipment are associated with one or more corresponding virtual objects. The automation system includes an augmented reality system including augmented reality glasses and executable program logic. The program logic is configured to receive a spatial position of a user wearing the augmented reality glasses from a positioning system, display, via the augmented reality glasses, one or more virtual objects associated with one or more equipment proximate to the spatial position of the user, receive a signal indicating a hands-free selection, by the user, of a virtual object linked to a respective secondary virtual object, and display, via the augmented reality glasses, the respective secondary virtual object and/or trigger an action associated with the selected virtual object.

## Description

### FIELD OF THE INVENTION

Certain embodiments of the invention relate to the field of automation systems. More specifically, certain embodiments of the invention relate to augmented reality-based automation systems as applied to industrial plants.

### BACKGROUND OF THE INVENTION

In industrial plants, input material is processed to manufacture one or more products. Properties of the manufactured product thus have a dependence upon manufacturing parameters and the input material.

Within process industry, in particular in industrial plants such as chemical or biological production plants, one or more input materials are processed using a production process for producing one or more chemical or biological products. Production environment in the process industry can be complex, accordingly the properties of the product may vary according to variations in the production parameters that influence said properties. Usually, the dependency of the properties on production parameters can be complex and intertwined with a further dependence on one or more combinations of specific parameters. It may thus be challenging to produce a chemical or biological product with consistent and/or predictable quality.

In particular, product quality and/or production stability is dependent upon operators having up-to-date information on the status of the plant, which includes quick and easily-accessible access to operational characteristics of the plant equipment and supporting infrastructure, as well as values for the current process parameters corresponding to respective equipment, ambient environmental plant parameters and/or parameters associated with raw materials and intermediate products produced during the processing of materials. Information on the status of the plant may also include maintenance history of the equipment and information on how each equipment operates, including ranges for the operational parameters for safely operating the equipment.

The operation and maintenance of production facilities usually requires specialized knowledge of machines and manufacturing processes. However, there is often a shortage of employees with appropriate knowledge. At the very least, it can take some time for appropriately trained maintenance personnel to be on site, for example, when a machine has a technical problem. There is hence a need for approaches that can improve the process of controlling and/or maintaining an automated plant production process to provide products of consistent and/or predictable quality.

### BRIEF SUMMARY OF THE INVENTION

At least some of the problems inherent to the prior art will be shown solved by the subject matter of the accompanying independent claims. At least some of the further advantageous alternatives will be outlined in the dependent claims.

Various embodiments provide a system for controlling an automated production process of an industrial plant as described by the subject matter of the independent claims. Advantageous embodiments are described in the dependent claims. Embodiments of the present invention can be freely combined with each other if they are not mutually exclusive.

In one aspect, the invention relates to an automation system for controlling an automated production process of an industrial plant. The industrial plant includes a plurality of equipment for performing the production process, where the plurality of equipment is spatially distributed in the industrial plant, and where each equipment of the plurality of equipment are associated with one or more corresponding virtual objects. The automation system includes an augmented reality system, which includes augmented reality glasses and executable program logic coupled to the augmented reality glasses. The executable program logic is configured to receive a spatial position of a user wearing the augmented reality glasses from a positioning system, display, via the augmented reality glasses, one or more virtual objects associated with one or more equipment proximate to the spatial position of the user, where at least one of the one or more virtual objects are linked to at least one respective secondary virtual object, and where the at least one respective secondary virtual object is stored in a database system, receive, from the augmented reality glasses, a signal indicating a hands-free selection, by the user, of a virtual object linked to a respective secondary virtual object, and display, via the augmented reality glasses, the respective secondary virtual object and/or trigger an action associated with the selected virtual object.

These features have the advantages of displaying a limited amount of information to a user (i.e., wearer) of the AR glasses, therefore not overwhelming the users with too much information. Additional information may be displayed to the user by the user performing a hands-free operation for selecting a virtual object that is linked to a respective secondary virtual object.

That is, the respective secondary virtual object, containing additional information, is displayed upon the user performing a hands-free selection of the virtual object linked to the respective secondary virtual object. Furthermore, selection of a virtual object linked to a secondary virtual object may advantageously enable the user to trigger, in a hands-free manner, an action associated with the virtual object, such as starting or stopping an equipment associated with the selected virtual object or modifying a process step or an operating parameter of the equipment associated with the selected virtual object. In addition, the hands-free selection advantageously allows the user to obtain additional information, in the form of video data, audio data, text data, image data and/or alarm data while at the same time using his/her hands for other tasks, such as adjusting machine parameters, throwing switches, repairing equipment and/or for maintaining safety in dangerous areas by using one's hands to grab railings, etc., for balance maintenance, for example. In addition, the user need not to carry instruction manuals and maintenance records when inspecting and controlling production lines and production processes.

According to embodiments, the executable program logic is configured to determine a number of the at least one virtual object linked to the at least one respective secondary virtual object and associated with one or more equipment proximate to the spatial position of the user, dynamically assign a distinct colour from a predefined colour set of colours to each virtual object linked to respective secondary virtual objects and display each virtual object linked to respective secondary virtual objects with the dynamically assigned distinct colour, and if the number of virtual objects linked to respective secondary virtual objects is greater than a number of colours of the predefined colour set, then display only those virtual objects linked to respective secondary virtual objects that are assigned distinct colours.

These features have the advantages of further limiting the amount of information to a user (i.e., wearer) of the AR glasses, therefore not overwhelming the users, by further limiting the display to the user of only those virtual objects linked to secondary virtual objects that can be assigned distinct colours from a limited number of predefined colours.

According to other embodiments, the hands-free selection comprises a voice selection of the virtual object. For example, the augmented reality glasses and/or the positioning system may include a voice detection unit configured to detect the voice selection and convert the voice selection into the signal indicating the hands-free selection, by the user, of the virtual object.

These features have the advantages of a using a non-complex hands-free selection process that enables the user to voice a single simple word, such as the colour of the virtual object that the user wishes to select. The system may advantageously be used multi-nationally by users speaking different languages, since most users either know, or can easily learn, the English words for easily recognizable standard colours, such as the primary colours, or the primary colours and at least some of the secondary colours, and the colours of black and white. Furthermore, the system does not require the training of voice recognition software, since the voice commands are simple, one or two syllable word, and in other embodiments, two simple words or a simple word and a number.

In one aspect, an automation system for controlling an automated production process of an industrial plant is provided. The automation system includes an augmented reality system, and the augmented reality system includes augmented reality glasses and executable program logic coupled to the augmented reality glasses. The executable program logic is configured to receive an up-to-date spatial position of a user wearing the augmented reality glasses from a positioning system, dynamically determine coordinates of a bounding space proximate to the user wearing the AR-glasses, display one or more virtual objects to the wearer of the AR glasses via the AR glasses if and only if coordinates of the virtual objects are within the bounding space, wherein the displayed virtual objects comprise data associated with monitoring and/or controlling the automated production process, and continuously update the coordinates of the bounding space and the virtual objects displayed therein as a function of the up-to-date spatial position of the user wearing the AR glasses.

According to embodiments, the executable program logic is configured to receive data being indicative of the orientation of the AR glasses and is configured to dynamically determine and continuously update the coordinates of the bounding space also as a function of the data being indicative of the orientation of the AR glasses.

According to embodiments, the executable program logic is configured to receive data being indicative of the eye orientation of the user wearing the AR glasses and is configured to dynamically determine and continuously update the coordinates of the bounding space as a function of the eye orientation of the user wearing the AR glasses.

These features have the advantages of quickly and efficiently enabling a user (i.e., wearer) of the AR glasses to obtain up-to-date virtual objects that are contained within a bounding space that dynamically changes according to the variable spatial position of the user and/or the variable orientation of the AR glasses, as well as the advantage of defining (i.e., "filtering") those objects for display by use of the bounding space, which is defined via determined coordinates. In addition, the virtual objects, which are represented of data, such as text, image, video, alarm and/or audio data, overlays (i.e., augments) the view of the plant through the AR glasses, thereby enabling the user to efficiently control and/or maintain the automated process in a hands-free manner (i.e., the user need not to carry instruction manuals and maintenance records when inspecting and controlling production lines and production processes). Furthermore, the amount of data does not overwhelm the user, since according to embodiments, the executable program logic is configured to limit the data (i.e., the virtual objects) displayed to the user via the augmented reality glasses (AR glasses) to only those virtual objects contained within the bounding space.

In embodiments, the executable program logic is configured to dynamically determine the coordinates of the bounding space in dependence on a number of equipment, and/or a corresponding number of virtual objects comprising data of said equipment in spatial proximity to the user wearing the AR-glasses, and/or in dependence on the dimensions of plant infrastructure in proximity to the user, such as height of the room and/or compartment within which the up-to-date spatial position of the user wearing the AR-glasses is located, and/or in dependence on the one or more user roles assigned to the user wearing the AR-glasses, and/or in dependence upon whether or not the bounding space is defined to be a data-type specific bounding space, in which the bounding space is defined to contain only virtual objects comprising objects of one or more data types selected from a group consisting of videos, images, texts, audio files and alarm messages.

According to some embodiments, the size and/or shape of the bounding space is determined as a function of the data type of the virtual object(s) to be displayed. For each data type, a respective data-type specific bounding space may be generated and used for determining if a particular virtual object should be output via the AR glasses.

A compartment can be, for example, a cavity associated with the equipment, e.g., a tank or a cavity of a machine. It may be that a user needs to enter the compartment for maintenance purposes. In this case, it may be helpful for the bounding space to reflect the internal dimensions of the compartment to avoid overloading the user with virtual objects comprising information for nearby machines or machine parts that he would not be able to operate in his current position anyway.

For example, the compartment may be labelled with a QR-code or RFID tag or a similar tag comprising a room-ID assigned to this compartment. The AR glasses or another electronic device of the user, e.g. the user's smartphone, may comprise a reading device (camera, RFID reader, etc) configured to read the room-ID from the tag or label when the user wearing the AR glasses enters the compartment. The room-ID is forwarded to the executable program logic to enable the program logic to determine the dimensions of the compartment being entered by the user and for creating and using a bounding space whose coordinates are determined as a function of the dimensions or ID of the compartment.

According to embodiments, the executable program logic is configured to dynamically determine the coordinates of the bounding space in dependence on a number of equipment and/or a corresponding number of virtual objects comprising data of said equipment in spatial proximity to the user wearing the AR-glasses. The dynamical determination of the coordinates of the bounding space in particular comprises determining the size and/or shape in dependence on the number of equipment or the corresponding number of virtual objects.

These features, singly or in different combinations with one another, have the advantages of providing a bounding space that is specifically tailored to provide the user with a more refined presentation of virtual objects, such as providing a bounding space containing only the most urgent virtual objects for display for the user, given the user's current up-to-date spatial position and/or the orientation of the AR glasses, or providing a bounding space containing only those virtual objects that are most relevant to the role or roles assigned to a particular user, including optionally displaying relevant virtual objects that are not necessarily proximate to the user, e.g., virtual objects corresponding to equipment located on different floors and/or rooms or areas of the plant, which without tailoring the bounding space, would not be available for display for the user. Furthermore, providing a bounding space whose size and shape is adjustable results in the user not being overwhelmed by too many virtual objects, particular relevant in providing boundary spaces for the user of the AR glasses whose spatial position is in high equipment density areas of the plant.

In another aspect, a method for controlling an automation system is provided that controls an automated production process of an industrial plant. The automation system includes an augmented reality system that includes augmented reality glasses and executable program logic coupled to the augmented reality glasses. The method includes receiving, by the executable program logic, an up-to-date spatial position of a user wearing the augmented reality glasses from a positioning system, dynamically determining, by the executable program logic, coordinates of a bounding space proximate to the user wearing the AR-glasses, displaying, by the executable program logic, one or more virtual objects to the wearer of the AR glasses via the AR glasses if and only if coordinates of the virtual objects are within the bounding space, wherein the displayed virtual objects comprise data associated with monitoring and/or controlling the automated production process, and continuously updating, by the executable program logic, the coordinates of the three-dimensional bounding space and the virtual objects displayed therein as a function of the up-to-date spatial position of the user wearing the AR glasses and/or as a function of the orientation of the AR glasses and/or as a function of the eye orientation ("gaze") of the user.

In one aspect, an automation system for controlling an automated production process of an industrial plant is provided, the industrial plant including a plurality of equipment for performing the production process, the plurality of equipment being spatially distributed in the industrial plant. The automation system includes an augmented reality system, and the augmented reality system includes a database system configured to store data and spatial coordinates associated with respective equipment of the plurality of equipment, augmented reality glasses configured to display the data, and executable program logic coupled to the augmented reality glasses. The executable program logic is configured to receive an up-to-date spatial position of a user wearing the augmented reality glasses from a positioning system and the data of equipment that is located in a proximity of the up-to-date spatial position of the user from the database system. The executable program logic is further configured to control the augmented reality glasses for display of at least some of the received data.

These features have the advantages of quickly, efficiently and securely receiving data by a user of the AR glasses corresponding to equipment in the vicinity of the user of the AR glasses, where the data overlays (i.e., augments) the view of the plant through the AR glasses, thereby enabling the user to efficiently control the automated process in a hands-free manner (i.e., the user need not to carry instruction manuals and maintenance records when inspecting and controlling production lines and production processes). Furthermore, the amount of data does not overwhelm the user, since according to embodiments, the executable program logic is configured to limit the data is displayed to the user via the augmented reality glasses (AR glasses) to data assigned to equipment that is in the vicinity of the location of the user. The executable program logic is further configured to control the augmented reality glasses for display of at least some, if not all, of the received data.

In one embodiment, the augmented reality system (AR system) further includes the positioning system. The positioning system is configured for sensing a spatial position of the user in the plant. These features have the advantage of tailoring the positioning system to the requirements of the industrial plant. For example, if the plant is not of an open floor plan, but is compartmentalized, a commercially available GPS system may not be effective in such a closed, in-door environment. A positioning system, as a component of the augmented reality system, may mitigate such problems.

For example, and according to further embodiments, the positioning system may include a spatial mapping mesh covering at least a portion of the plant, an indoor positioning system, a cellular positioning system, or even a combination of one of the preceding systems with a GPS system.

According to embodiments, the spatial mapping mesh comprises spatial anchors. The spatial anchors are interconnected. Each spatial anchor relates a coordinate system associated with the augmented reality glasses for the display of the data to a spatial coordinate system associated with the spatial coordinates of one or more of the plurality of equipment stored in the database system. The program logic is configured to display the data of equipment that is located in a proximity of the up-to-date spatial position of the user via the augmented reality glasses at predefined relative positions to the spatial anchors.

According to embodiments, the augmented reality system is configured to create an avatar for at least one remote user. The remote user is a user who is remote to the industrial plant. The program logic is configured to display the avatar in a proximity of the up-to-date spatial position of the user wearing the augmented reality glasses via the augmented reality glasses. According to preferred embodiments, the augmented reality system is configured to provide a bidirectional visual and/or acoustic communication channel between the user wearing the augmented reality glasses and the remote user. Thereby, the AR-glasses give the wearer the impression that he or she is talking directly to the avatar, not to the remote user. For example, the program logic displays the avatar via the AR glasses and/or controls the output of the voice of the remote user via speakers of the AR glasses such that the position of the avatar is perceived as the source of the voice of the remote user.

According to some embodiments, the automation system comprises a robot with a camera and/or a microphone. The robot is located in the industrial plant, so it is "local" for the user wearing the AR glasses and working in the industrial plant. The augmented reality system comprises a robot-control module configured to control the movement and/or orientation of the robot such that the position and/or orientation of the robot reflects the position and/or orientation of the avatar within the augmented reality displayed via the AR glasses. The robot-control module is configured to automatically update the position and/or orientation of the avatar and the robot in accordance with a change in the position and/or orientation of the remote user or in response to a control command submitted by the remote user.

This may allow for a seamless integration and merging of the "realities" of a remote user, a local user and of various physical objects (raw materials, equipment) into a single, augmented reality displayed via the AR glasses.

According to embodiments, the augmented reality glasses comprise an acoustic output interface, wherein the augmented reality system is configured to provide a bidirectional acoustic communication channel between the user wearing the augmented reality glasses and the avatar. The program logic is configured to control the acoustic output interface such that the volume of the voice of the avatar output via the acoustic output interface to the user wearing the augmented reality glasses negatively correlates with the distance of the user wearing the glasses and the avatar within the coordinate system associated with the augmented reality glasses for the display of the data.

The acoustic output interface can be, for example, speakers in the environment of the user wearing the AR glasses, headphones that can be integrated into the AR glasses, or in-ear speakers.

In an embodiment, the database system is graph database system, and/or a spatial database system and/or a streaming database system.

In another embodiment, the automation system further includes a control system. The control system can be a distributed control system. The control system includes a memory having stored one or more process parameters and a control software. At least some of the parameters are stored in association with the one or more of the equipment, e.g. by storing the parameters in association with equipment-IDs. The control system comprises a processor configured to execute the process control software for automatically controlling the production process. For example, the control software can control the use of the equipment such that the production process is performed in accordance with the one or more parameters assigned to the said equipment. For example, this can imply that one or more of the parameters represent desired machine states and/or product features and the control is executed such that the machines operate in the desired state and/or such that the products have the desired features. For example, if a product shall have a desired shape, size and/or temperature, the production process can be controlled such that any difference between a measured, observed product feature and the desired product feature is minimized.

According to embodiments, the AR system is configured to generate and display a GUI via the AR glasses, wherein the GUI enables the user who is wearing the AR glasses to set one or more of the parameters, e.g., via gesture detection and gesture interpretation.

For example, the AR glasses can be equipped with a gyroscope which is configured to detect the orientation of the AR-glasses and the user carrying the AR-glasses. In addition, the AR glasses can be equipped with one or more cameras configured to acquire one or more images of the vicinity in front of the user. The executable program logic can be configured to analyze the digital images acquired by the camera(s) of the AR glasses for identifying gestures of the user. The program logic is configured to identify a user action and an entry, modification, or deletion of a parameter via the GUI as a function of the type of gesture, the position and/or direction of the gesture.

These features have the advantage enabling the user of the AR glasses to modify the control software of the distributed control system, based on the data conveyed to the user through the AR glasses, to change the operation of the equipment for providing a more consistent and predictable product. For example, a user may determine that a particular sensor of an equipment or equipment part is too sensitive and may therefore erroneously detect production errors (false positive problems). In this case, the user may set a sensitivity-control parameter of this sensor to a lower value, thereby reducing the number of false-positive alarms which may slow down the production process. According to another example, the user may determine that an actuator of the equipment is too weak, thereby causing an unacceptably large number of erroneous products. In this case, the user may use the GUI presented via the AR glasses to increase the parameter controlling the power/action amplitude of the actuator of the equipment.

According to embodiments, the AR system is configured to generate a GUI which selectively allows the user to set, modify or delete parameters assigned to equipment which are within a predefined maximum distance from the user. For example, the maximum distance may be 5 m, or 2 m, or even 1 m. This may have the advantage that only those parameters are presented to the user which are of relevance when dealing with a particular equipment or equipment part.

According to embodiments, the control system is a distributed control system comprising a plurality of control software programs or modules interconnected with each other via a network.

According to a further embodiment, the at least one equipment comprises one or more sensors coupled to the at least one equipment, and one or more actuators coupled to the at least one equipment. The one or more sensors are configured to measure the one or more process parameters of the at least one equipment, where the one or more process parameters indicate the current state of the production process of the plant and/or indicate the current state or mode of operation of the equipment. The one or more actuators are configured to control the one or more process parameters. In addition, the distributed control system is coupled to the one or more sensors and the one or more actuators, and the processor is configured to execute the process control software for automatically controlling the production process based on measurement signals received from the one or more sensors and control signals sent to the one or more actuators. In addition, or alternatively, the one or more actuators are configured to be operated in accordance with the one or more control parameters (e.g., pressure, temperature light intensity, concentration of one or more chemicals, machine operation mode, etc.).

According to a further embodiment, the automation system of claim includes a user database coupled to the distributed control system. The user database is configured to store user information associated with the production process. In some embodiments, the user information includes user IDs, user roles and/or user privileges.

In yet another embodiment, the executable program logic is configured to receive user credentials from the user and authenticate the user. For example, the authentication can be performed as a function of matching the user credentials with a user ID of the user IDs. The user ID of the user wearing the augmented reality glasses is associated with one or more of the user roles and each user role of the one or more user roles includes one or more of the user privileges. The executable program logic is further configured to select and display content of the at least some of the received data for display based upon the one or more user roles and/or the one or more user privileges associated with the user ID.

These features have the advantage of providing data only to authorized users (i.e., providing data through a secure system), and if the user is authorized, then the selection of the data to be viewed by a user, which may include the type of data and and/or the content of the data, is further based on the one or more user roles and/or the one or more user privileges associated with the user's user ID.

According to embodiment, the executable program logic is configured to generate a GUI to be displayed via the AR glasses to the user, whereby the content of the GUI to be displayed is determined dynamically as a function of the role assigned to the user wearing the AR glasses. The executable program logic is configured to generate a first type of GUI for the user if the user is within a predefined maximum distance from a particular equipment and has a first role, and is configured to generate a second type of GUI for the user if the user is within the predefined maximum distance from said particular equipment and has a second role. The first and the second GUIs are different, e.g., comprise different GUI elements, display different information, enabling different types of actions for maintaining and/or controlling the said equipment. For example, the first user role can be "operator", i.e., a user who is obliged to control and/or monitor one or more steps in a production workflow. The second user role can be "maintenance worker", i.e., a user who is obliged to do maintenance word to ensure that the at least one equipment works properly. For example, a maintenance worker may be necessary to repair a failed machine, to replace worn-out parts of the equipment, perform some quality testing of the equipment etc. In general, a maintenance worker is responsible for technically complex tasks which may require in-depth technical knowledge of the equipment which is typically not available to a user having "operator" role. So, if an "operator" user approaches a particular equipment/machine, he or she will see a GUI which is different from the GUI a "maintenance worker" will see via his or her AR-glasses when approaching the said equipment/machine.

This may make various tasks to be executed with the help of or on an equipment more efficient and error-robust, because each user will only see information via the AR glasses he or she really needs for fulfilling his or her actual task. The risk of error scenarios in which a "normal operator" causes an error in a production process by accidentally modifying a machine parameter which should only be changed by a skilled maintenance worker may greatly be reduced, because the "operator" user will not "see" a GUI enabling him or her to change said machine parameters.

According to embodiments, the executable program logic is configured to perform a query of the database based upon the up-to-date spatial position for retrieving, from the database, the data of equipment that are in the proximity of the up-to-date spatial position of the user.

According to embodiments, the database system is a spatial database system, where the spatial database system includes a spatial database. The executable program logic is configured to perform a query of the spatial database based upon the up-to-date spatial position for retrieving, from the spatial database, the data of equipment that are in the proximity of the up-to-date spatial position of the user.

These features have the advantage of storing, searching, and retrieving data from the database system based upon querying the spatial database, including an up-to-date spatial position of the user of the AR glasses. That is, data associated with a plant object that is in proximity to the spatial position of the user is linked to the spatial position of the plant object, which is also stored in the database system, thereby enabling a fast and efficient manner of accessing the respective data when the database is queried. These features also have the advantage of only retrieving data at the request of a query, thereby saving network bandwidth.

In another embodiment, the database system is accessible via a subscription-based streaming service. This database system can be referred to as streaming database system. It may be implemented as a spatial and/or graph-based database system.

The executable program logic is configured to receive from the database via the streaming service the data of equipment that are in the proximity of the up-to-date spatial position of the user. According to embodiments, the executable program logic is configured to selectively receive from the spatial database via the streaming service the data of equipment that are in the proximity of the up-to-date spatial position of the user (but not data of equipment not in the proximity of the user). For example, a predefined or user-defined maximum distance threshold may be used by the database system for determining whether or not the position of an equipment is proximate to the user or not. These features have the advantage of quickly accessing data on a continuous basis through a streaming service, thereby eliminating sending and/or receiving queries.

For example, a user can subscribe to a streaming service which notifies the user in case the at least one equipment approaches the user and is now located within a predefined maximum distance from the user. When the user subscribes to this service, the current position of the user is automatically determined and provided as one parameter of the subscription request. The database system is configured to automatically and repeatedly check if the distance between the user having subscribed to the said notification service and the at least one equipment is below the maximum distance threshold. In response to this determination, a GUI, one or more GUI elements and/or parameters assigned to the at least one equipment are displayed to the user via the AR glasses. For example, the subscription of the user to the service is performed by the program logic automatically, e.g., upon a successful authentication of the user at the AR system and/or upon the user approaching the production system closer than a user-defined or predefined maximum distance of e.g., less than 10 m, or less than 5 m, or less than 2 m, or less than 1 m.

According to embodiments, the database system is configured to provide, in response to a query (e.g. a conventional SQL query) of the executable program logic, selectively the data of equipment that are proximate to the up-to-date spatial position of the user wearing the augmented reality glasses. A movement of the user relative to the equipment triggers the executable program logic to submit a new query to the database system comprising a new up-to-date spatial position of the user.

According to other embodiments, the database system is configured to provide, via the subscription-based streaming service, selectively the data of equipment that are located proximate to the up-to-date spatial position of the user wearing the augmented reality glasses. A movement of the user relative to the equipment triggers the executable program logic to update the subscription with new up-to-date spatial position of the user.

According to embodiments, the program logic is configured to update the subscription of the user to the streaming service automatically in response to a change of the position of the user. For example, the AR glasses may comprise a GPS sensor or another means for determining the current position of the user. In response to determining that the user has changed his or her position, the subscription(s) of the user to the streaming service(s) of the database system are automatically updated, thereby ensuring that the user will always be able to see data and GUIs relevant for the one or more equipment next to the user. This may have the advantage that the AR system and its components do not have to repeatedly submit conventional SQL queries with current position information of the user. It is sufficient to update the subscription of the user to one or more streaming services associated with the database system to ensure the data displayed via the AR glasses takes into account the current position of the user, thereby significantly reducing network traffic and the overall computational load of the AR system, in particular the computational load of the database system.

According to yet another embodiment, the spatial database system is a graph database system, which includes a graph database having a plurality of interconnected nodes. Each node represents one or more objects of the industrial plant and includes spatial information associated with the one or more objects. For example, in case a node represents multiple objects, these objects are typically close to each other during the manufacturing process. Depending on the embodiment, the spatial information associate with the one or more objects may be the position information of a single one of the multiple objects, or may be the position information of each of the multiple physical objects. The object is a sensor, an actuator, a raw material, an equipment of the plurality of equipment, e.g., a tool, or a machine or a robot. The architecture of the graph database enables a faster search and access to data associated with a given object in the plant, using only the spatial coordinates of the user of the AR glasses in the plant. Furthermore, by representing objects of the industrial plant which are and remain proximate to each other during the manufacturing process by a single node in the graph, it is possible to monitor the position of all objects of a node at least approximately so that positional information of at least one of the objects represented by the node is available.

According to some embodiments, the executable program logic is configured for:
- receiving coordinates of visual objects graphically representing the data of the equipment to be displayed; for example, the program logic may receive coordinates, e.g. positional 3D coordinates and the size of a visual representation of a handbook or instruction manual for said equipment, or coordinates of a virtual "TV screen" within which a tutorial for operating the equipment shall be displayed via the AR glasses;
- determining said user's line of sight in the coordinate system of the real world; for example, the executable program logic may receive, from the positioning system, an indication of the current position and orientation of the user wearing the AR glasses;
- receiving, from the database system, coordinates of real-world objects which are proximate to the up-to-date spatial position of the user wearing the augmented reality glasses; the real-world object can be a portable and/or mobile equipment, raw material, or product. The real-world object can be an object whose current position is constantly monitored and traced by the augmented reality system, e.g. by means of a GPS sensor, an indoor-positioning system, one or more capacitive or inductive proximity sensors, etc; so the coordinates of the real-world object indicate the real position, orientation and size of the real-world object in the real world; for example, the program logic may receive coordinates of the virtual mesh which was generated as an overlay of the equipment of the real-world production line; the received coordinates may also be coordinates which are determined dynamically by means of the position-determination-sensor(s) for the equipment or other type of real-world object;
- determining if one or more of the virtual objects representing data of an equipment are positioned along the user's line of sight and are farther away from the user than at least one of the real-world object which is also positioned along the user's line of sight; and
- not displaying selectively the one or more virtual objects determined to be on the user's line of sight and be located farther away than at least one of the real-world objects.

This may have the advantage that in case it is determined that a virtual object, e.g. a handbook, would, if displayed, be hidden by a "real world object", this virtual object is not displayed.

According to embodiments, the executable program logic is configured to:
- receive data being indicative of the position of one or more physical objects, each physical object being in particular an equipment used for the automated production process or a material used, modified or produced by the production process;
- determine the line of sight between the user wearing the glasses and one of the virtual objects;
- display the one virtual object via the AR glasses if and only if the virtual object is within the bounding space and none of the physical objects is positioned in the line of sight between the user wearing the glasses and the virtual object

This feature may prevent the user from being distracted, as it is assumed that a real-world object that is even closer to the user on the user's line of sight (viewing axis) than, for example, a hologram with an educational film, will require even greater attention. For example, a user may be performing repair work on a conveyor belt while the conveyor belt continues to run. As soon as a workpiece transported on the belt comes into the user's view direction and moves in front of the hologram, the hologram is completely or partially hidden (because the AR system stops displaying the hologram or at least the part of the hologram hidden by the real-world object). This has the advantage that the user is always aware of the moving object, so that accidents can be avoided. In addition, reading errors are also avoided, because when the hologram is displayed overlaid on a dynamically changing real-world scenery using the AR glasses, the brightness and contrast of the background change, so the user could make mistakes when reading the data of the virtual objects. It also makes the visual impression even more "immersive" for the user, as real, physical objects, which can be static or moving, can overlay and hide virtual objects, making the dynamically "hidden" virtual objects seem even more real and blend more seamlessly with the physical world objects.

According to embodiments, one or more of the nodes comprises or is stored in association with a respective container.

A "robot" as used herein is a machine which is able to move and perform certain tasks automatically. According to some embodiments, the robot comprises a robot-control module configured to control the movement, position, orientation and/or the tasks executed by the robot. In addition, or alternatively, a robot can be operatively coupled to a robot-control module external to the robot. For example, the control system described herein for embodiments of the invention can comprise the robot-control module or parts thereof. The robot-control module is configured to receive status information from one or more sensors the robot and to send control commands to the robot or to one or more parts of the robot, whereby the control commands determine the movement, position, orientation and/or the tasks executed by the robot. The one or more sensors of a robot can comprise position determination sensors such as GPS sensors, gyroscopes and accelerometers for determining the position and orientation of the robot, cameras and microphone for capturing images or videos and/or acoustic signals.

The coordinate system "associated with the AR glasses" is a coordinate system of an augmented reality comprising real-world objects (such as machines and raw materials) and one or more virtual objects. In the coordinate system of the augmented reality, coordinates of the real-world objects and of the virtual objects are mapped to this augmented-reality coordinate system and are displayed to the user wearing the AR glasses via said glasses such that the virtual objects and the real-world objects form part of a shared space (referred to as augmented reality). So, the coordinate system "associated with the AR glasses" can be considered the coordinate system of an augmented reality.

A "container" as used herein is an isolated runtime environment, e.g. an isolated user space instance. For example, a container can be an operation-system-level virtualization unit, wherein the kernel of the operation system allows and supports the existence of multiple isolated virtual runtime environments in parallel. For example, one of the following currently available container platforms can be used for implementing the containers: LXC, Solaris containers, Docker containers, virtual private servers (OpenVZ), virtual environments (VEs), virtual kernels (DragonFly BSD), or jails (FreeBSD jail or chroot jail). Each container may generate a runtime environment which looks to a software program running in them like real computers.

According to some embodiments, each container is stored within or assigned to a respective node of a graph of a graph database of the database system described herein. Each container comprises software programs and/or functions configured for monitoring and/or controlling the position, orientation and/or actions of one or more physical objects (e.g., raw materials, equipment, etc.) represented by said node, but not of physical objects represented by other nodes of the graph. Thereby, each container may encapsulate the functions used for monitoring and/or controlling the one or more objects. This may allow preventing unforeseeable errors and conflicts which may be caused by unknown software interdependencies. For example, a software problem might arise when a device driver for a machine is replaced by a newer version while there exists another machine whose control relies on the outdated version of the driver.

Depending on the embodiment, the degree of isolation of the containers from each other may vary to allow at least a limited, explicitly defined and hence highly secure data exchange between the containers and the software comprised therein.

According to some embodiments, each container implements an application programming interface (API) which enables the container to exchange data with other containers exclusively via this API. This may prevent a situation where software dependencies between multiple devices are overseen, and may allow for a container-individual data exchange and control protocol defining which other containers can exchange what kind of data with this container via the API.

According to other embodiments, there may exist a central data exchange interface provided at the application level by a container management software. Thereby, data exchange between containers is enabled in a centralized and more unformal approach, which may nevertheless prevent errors caused by hidden software interdependencies.

A computer program running on an ordinary operating system can "see" (detect the existence of and/or access) all resources (connected devices, files and folders, network shares, CPU power, quantifiable hardware capabilities) of that computer. However, according to some embodiments of the invention, programs running inside of a container can only "see" the container's contents and devices assigned to the container. In this case, the software in a container can only see the object represented by the graph node assigned to the container. In some embodiments, the containers are programmed and/or configured such that they are able to exchange data with other containers only via one or more APIs (and hence, on the application layer) provided by the respective container and/or a central container management software.

For example, the one or more objects monitored and/or controlled by a container's software can be or comprise one or more sensors and/or actuators of an equipment (e.g., a tool, a machine, a robot), the equipment or raw material. Hence, the software within a container can only "see" and optionally modify parameters of equipment represented by the container's respective node. It cannot see or manipulate objects represented by other containers assigned to other nodes unless in cases where a defined API for data exchange with this other container exists.

According to some embodiments, each of the containers comprises software for monitoring and/or operating the one or more objects represented by said node and comprises a position reporting module. A position reporting module is a software program or function configured to monitor the position of at least one of the one or more objects represented by the respective node and to update the spatial information associated with the at least one object of the respective node in the database system. For example, a node may represent an object which may comprise a GPS sensor or other means for repeatedly and automatically determine its own position. The position information is automatically transferred from the position sensor to the position reporting module and is stored by the position reporting module in the database system. This may ensure that any change in the position of the equipment, e.g., the current position of a movable robot, is automatically propagated to the positional information stored in the database system. This allows automatically determining if the equipment which has been moved in the direction of the user with the augmented reality glasses is now so close to the user wearing the AR glasses that data related to this object shall be displayed via the AR glasses. For example, the position reporting module can be a software program having subscribed to an equipment-specific streaming service provided by the database system. Whenever the respective equipment has actively or passively changed position, sensors on the equipment and/or in the environment detect the positional change of the equipment and the new position of the equipment and update the position information of the equipment in the database system accordingly. Updating the position information in the database triggers the submission of a message from the database system to the position reporting module of the container assigned to the node representing the said equipment. The program logic of the augmented reality glasses is configured to use the updated positional information of the equipment to check if the distance between the user wearing the AR-glasses and the equipment is small enough to display the data assigned to the said equipment or not.

According to some embodiments, one or more of the nodes of the graphs can comprise or be stored in association with two or more containers. Each of the containers may comprise software for monitoring and/or operating one or more physical objects. This may be beneficial as the topology of the graph and of the containers and the selection of objects monitored and/or controlled by a respective container can be flexibly adapted to the specific needs of a given industrial manufacturing facility.

Using containers may have the advantage that a container's activities will not have any hidden or unforeseeable impact on activities of the other containers. It is possible to delete, add, or move a graph node representing a container freely within the graph without affecting the activities in other containers. Likewise, it is possible to change or replace software comprised in a container without affecting the software used for monitoring and/or controlling other objects in an unforeseen way. Moreover, it may be possible to move the object in the real world without risking that the object status or position may interfere with the software used for monitoring and/or controlling physical objects represented by other containers. The changed position of the object will be recognized by the position reporting module of the respective container, but this will also have no impact on the data and software stored in the other containers. This may reduce downtimes of the AR system, because individual nodes and respective hardware objects can easily be modified or replaced without the risk of impeding the normal operation of the other hardware objects and their software programs. Since containers are configured as standardized units of software or in other words, an application package that includes all its libraries and dependencies, the container can be executed (i.e., run) quickly and reliably regardless of architecture of the database system.

In a further embodiment, each of the containers advantageously, and automatically, updates a configuration of the plant in response to movement and/or rearrangement of objects in the plant. For example, the configuration can be a file or a set of files or a set of one or more data records in a database. The configuration may represent the totality of equipment (machines, tools, robots, etc.) of the plant which can be used for performing the production process and comprises an indication of the position of each of the equipment. Embodiments of the invention may have the advantage that the configuration is always and fully automatically held up-to date. In case an operator transports a particular tool, machine or machine part from one production unit to the next, the configuration of the plant is automatically updated, because the positioning system will automatically determine the relocation of the tool, machine or machine part and update the configuration of the plant automatically.

In case the above-mentioned node should represent multiple physical objects, including the object with the GPS sensor and further objects without a positioning sensor, the position information of the object with the GBS sensor can be used for monitoring the position of other, physically coupled objects at least approximately even in case these further physical objects do not comprise a position determination sensor.

According to embodiments, the spatial information associated with the object of the respective node includes one or more spatial coordinates of the object. The one or more spatial coordinates correspond to one or more points on a bounding surface of the object and/or inside the bounding surface of the object.

A "bounding surface of an object" as used herein is the surface of the smallest possible 3D wrapper object that completely encloses the entire object. Typically, the 3D wrapper object is a rectangular box. Using a bounding surface of objects instead of the real and typically topologically much more complex surface for performing spatial operations in the database system (distance determination, etc.) may have the advantage that the speed of the spatial operations may tremendously be increased. Due to the limited complexity of wrapper objects, in particular cubes or rectangular boxes, geometrical operations such as distance determination, computation of an intersect area, an intersect volume, a join area, a join volume etc. can be performed with much less CPU capacity that performing these operations on "realistic" object surface representations.

A "bounding space" is a space proximate to the wearer of the AR glasses in which virtual objects may be displayed to the wearer. For example, the bounding space may surround the user or may not surround the user.

According to embodiments, the bounding space determines whether or not a virtual object is rendered, whereby virtual objects are rendered if and only if they lie within the bounding space. For example, the rendering can comprise transforming a 2D or 3D model of an object into a pixel representation of at least parts of the object. In addition, or alternatively, it can comprise receiving data associated with a virtual object from one or more data sources and processing the received data such that at least parts of the data are transformed into a pixel representation of the data. Often, rendering is a CPU-consuming process, and also the data retrieval from the database may encompass retrieving data via a network connection and may hence generate a significant network traffic.

A "bounding surface of a bounding space" is defined to be a surface that defines (i.e. encloses) the bounding space.

In a further aspect, a method of using an automation system for controlling an automated production process of an industrial plant is provided. The industrial plant including a plurality of equipment for performing the production process. The plurality of equipment is spatially distributed in the industrial plant. The method comprises:
- providing the automation system, the automation system comprising an augmented reality system, the augmented reality system including:
   ∘ a database system having stored data and spatial coordinates associated with respective equipment of the plurality of equipment;
   ∘ augmented reality glasses configured to display the data; and
   ∘ executable program logic coupled to the augmented reality glasses,
- receiving, by the executable program logic, an up-to-date spatial position of a user wearing the augmented reality glasses, from a positioning system,
- determining, by the database system, the data of equipment that are located in a proximity of the up-to-date spatial position of the user,
- receiving, by the executable program logic, the determined data of equipment from the database system;
- controlling, by the executable program logic, the augmented reality glasses to display of at least some of the received data, the displayed data enabling the user to control and/or maintain the automated production process.

Further embodiments of the present disclosure include: Clause 1: An automation system for controlling an automated production process of an industrial plant, the industrial plant including a plurality of equipment for performing the production process, the plurality of equipment being spatially distributed in the industrial plant, the automation system comprising an augmented reality system. The augmented reality system includes: a database system configured to store data and spatial coordinates associated with respective equipment of the plurality of equipment; augmented reality glasses configured to display the data; and executable program logic coupled to the augmented reality glasses, the executable program logic configured to receive an up-to-date spatial position of a user wearing the augmented reality glasses from a positioning system 108 and the data of equipment that are located in a proximity of the up-to-date spatial position of the user from the database system, the executable program logic further configured to control the augmented reality glasses for display of at least some of the received data. Clause 2: The automation system of clause 1, wherein the augmented reality system further includes the positioning system, the positioning system configured for sensing a spatial position of the user in the plant. Clause 3: The automation system of clause 2, wherein the positioning system includes a spatial mapping mesh covering at least a portion of the plant, an indoor positioning system, a cellular positioning system, or a GPS receiver configured to determine the spatial position. Clause 4: The automation system of clause 3, wherein the spatial mapping mesh comprises spatial anchors, wherein the spatial anchors are interconnected, and wherein each spatial anchor relates a coordinate system associated with the augmented reality glasses for the display of the data to a spatial coordinate system associated with the spatial coordinates of one or more of the plurality of equipment stored in the database system, wherein the program logic is configured to display the data of equipment that is located in a proximity of the up-to-date spatial position of the user via the augmented reality glasses at predefined positions relative to the spatial anchors. Clause 5: The automation system of any one of the previous clauses, wherein the augmented reality system is configured to create an avatar for at least one remote user, the remote user being remote to the industrial plant, wherein the program logic is configured to display the avatar in a proximity of the up-to-date spatial position of the user wearing the augmented reality glasses via the augmented reality glasses, wherein preferably the augmented reality system is configured to provide a bidirectional visual and/or acoustic communication channel between the user wearing the augmented reality glasses and the remote user. Clause 6: The automation system of clause 5, wherein the augmented reality glasses comprise an acoustic output interface, wherein the augmented reality system is configured to provide a bidirectional acoustic communication channel between the user wearing the augmented reality glasses and the avatar, and wherein the program logic is configured to control the acoustic output interface such that the volume of the voice of the avatar output via the acoustic output interface to the user wearing the augmented reality glasses negatively correlates with the distance of the user wearing the glasses and the avatar within the coordinate system associated with the augmented reality glasses for the display of the data. Clause 7: The automation system of clause 5 or 6, wherein the automation system comprises a robot with a camera and/or a microphone, the robot being located in the industrial plant, wherein the augmented reality system comprises a robot-control module configured to control the movement and/or orientation of the robot such that the position and/or orientation of the robot reflects the position and/or orientation of the avatar within the augmented reality displayed via the AR glasses, and wherein the robot-control module is configured to automatically update the position and/or orientation of the avatar and the robot in accordance with a change in the position and/or orientation of the remote user or in response to a control command submitted by the remote user. Clause 8: The automation system of any one of the preceding clauses, the database system being a graph database system, a spatial database system and/or a streaming database system. Clause 9: The automation system of any one of the previous clauses, the automation system further comprising: a distributed control system coupled to the database system, the distributed control system including: a memory configured to store one or more process parameters in association with one or more of the equipment and to store process control software, and a processor configured to execute the process control software for automatically controlling the production process. Clause 10: The automation system of clause 9, further comprising: one or more sensors coupled to at least one equipment, the one or more sensors configured to measure the one or more process parameters of the at least one equipment, the one or more process parameters indicating the current state of the production process of the plant and/or the current state or mode of operation of the equipment; and one or more actuators coupled to the at least one equipment, the one or more actuators configured to control the one or more process parameters or configured to be operated in accordance with the one or more control parameters, wherein the distributed control system is coupled to the one or more sensors and the one or more actuators, wherein the processor is configured to execute the process control software for automatically controlling the production process based on measurement signals received from the one or more sensors and control signals sent to the one or more actuators. Clause 11: The automation system of any one of the previous clauses, further comprising a user database coupled to the distributed control system, the user database configured to store user information associated with the production process, wherein the user information comprises user IDs, user roles and/or user privileges. Clause 12: The automation system of clause 11, wherein the executable program logic is configured to receive user credentials from the user and to authenticate the user, wherein a user ID of the user wearing the augmented reality glasses is associated with one or more of the user roles and each user role of the one or more user roles includes one or more of the user privileges, and wherein the executable program logic is further configured to select and display content of the at least some of the received data for display based upon the one or more user roles and/or the one or more user privileges associated with the user ID. Clause 13: The automation system of clause 11 or 12, wherein the one or more user roles includes one or more of a maintenance role and an engineering role, and the one or more user privileges defines access to one or more specific equipment of the plurality of equipment. Clause 14: The automation system of any one of the previous clauses, wherein the data comprises one or more task instructions associated with the respective equipment. Clause 15: The automation system of any one of the previous clauses, wherein one or more equipment of the plurality of equipment are one or more machines. Clause 16: The automation system of any one of the previous clauses, wherein the executable program logic is configured to perform a query of the database based upon the up-to-date spatial position for retrieving, from the database, the data of equipment that are located in the proximity of the up-to-date spatial position of the user. Clause 17: The automation system of any one of the previous clauses, wherein the database system is accessible via a subscription-based streaming service, and wherein the executable program logic is configured to receive from the database via the streaming service the data of equipment that are located in the proximity of the up-to-date spatial position of the user. Clause 18: The automation system of clause 16 or 17, wherein the database system is configured to provide, in response to the query of the executable program logic according to clause 16, selectively the data of equipment that are located proximate to the up-to-date spatial position of the user wearing the augmented reality glasses, whereby a movement of the user relative to the equipment triggers the executable program logic to submit a new query to the database system comprising a new up-to-date spatial position of the user; or wherein the database system is configured to provide, via the subscription-based streaming service according to clause 17, selectively the data of equipment that are located proximate to the up-to-date spatial position of the user wearing the augmented reality glasses, whereby a movement of the user relative to the equipment triggers the executable program logic to update the subscription with new up-to-date spatial position of the user. Clause 19: The automation system of any one of the previous clauses, wherein the executable program logic is configured for: receiving coordinates of visual objects graphically representing the data of the equipment proximate to the user wearing the augmented reality glasses; determining said user's line of sight in the coordinate system of the real world; receiving, from the database system, coordinates of real-world objects which are proximate to the up-to-date spatial position of the user wearing the augmented reality glasses; determining if one or more of the virtual objects representing data of an equipment are positioned along the user's line of sight and are farther away from the user than at least one of the real world objects which is also positioned along the user's line of sight; and not displaying selectively the one or more virtual objects determined to be on the user's line of sight and be located farther away than at least one of the real-world objects. Clause 20: The automation system of any one of the previous clauses, wherein the database system is a graph database system, the graph database system including a graph database having a plurality of interconnected nodes, wherein each node represents one or more objects of the industrial plant and includes spatial information associated with the one or more objects, and wherein the one or more objects are selected from a group consisting of a sensor, an actuator, raw material, and/or an equipment of the plurality of equipment, the equipment being e.g., a machine or a robot. Clause 21: The automation system of clause 20, wherein one or more of the nodes comprises or is stored in association with at least one respective container, each container being an isolated runtime environment instance comprising software for monitoring and/or operating at least one of the one or more objects represented by said node, and wherein the software in each container comprises a position reporting module configured to monitor the position of at least one of the one or more objects of the respective node and to update the spatial information associated with the at least objects of the respective node in the database system. Clause 22: The automation system of clause 21, wherein the spatial information associated with the least one object of the respective node includes one or more spatial coordinates of the at least one object, the one or more spatial coordinates corresponding to one or more points on a bounding surface of the object and/or inside the bounding surface of the object. Clause 23: The automation system of any one of the previous clauses, further comprising a network communicatively coupling the database system to the augmented reality glasses. Clause 24: A method of using an automation system for controlling an automated production process of an industrial plant, the industrial plant including a plurality of equipment for performing the production process, the plurality of equipment being spatially distributed in the industrial plant, the method comprising: providing the automation system, the automation system comprising an augmented reality system, the augmented reality system including: a database system having stored data and spatial coordinates associated with respective equipment of the plurality of equipment; augmented reality glasses configured to display the data; and executable program logic coupled to the augmented reality glasses; receiving, by the executable program logic, an up-to-date spatial position of a user wearing the augmented reality glasses, from a positioning system; determining, by the database system, the data of equipment that are located in a proximity of the up-to-date spatial position of the user; receiving, by the executable program logic, the determined data of equipment from the database system; controlling, by the executable program logic, the augmented reality glasses to display of at least some of the received data, the displayed data enabling the user to control and/or maintain the automated production process.

These embodiments may be combined with and any of the hands-free embodiments described above.

### BRIEF DESCRIPTION OF SEVERAL VIEWS OF THE DRAWINGS

The following embodiments of the invention are explained in greater detail, by way of example only, making reference to the drawings in which:
- Fig. 1A: illustrates an automation system for controlling an automated production process of an industrial plant, according to an embodiment of the present invention;
- Fig. 1B: illustrate a top-down view of AR glasses being worn on a head of a user, according to an embodiment of the present invention;
- Fig. 1C: illustrate a top-down view of AR glasses being worn on a head of a user, according to another embodiment of the present invention;
- Fig. 1D: illustrate a top-down view of AR glasses being worn on a head of a user, according to yet another embodiment of the present invention;
- Fig. 1E: illustrates a bounding space surrounding the user wearing the AR glasses;
- Fig. 1F: illustrates a bounding space in proximity to but not surrounding the user wearing the AR glasses;
- Fig. 1G: illustrates two different bounding spaces for two different types of virtual objects;
- Fig. 1H: illustrates a bounding space whose position and/or orientation is adapted dynamically to the gaze of the user wearing the AR glasses.
- Fig. 2: illustrates an exemplary task instruction, according to an embodiment of the present invention;
- Fig. 3: illustrates an exemplary node of a graph-database, the node representing a task instruction;
- Fig. 4: illustrates a flow chart of a method for operating an automation system;
- Fig. 5: illustrates an exemplary GUI displayed to an "operator" user; and
- Fig. 6: illustrates an exemplary GUI displayed to a "maintenance worker" user;
- Fig. 7: illustrates the use of spatial anchors and shows an avatar of a remote user;
- Fig. 8: illustrates a coordinate system used for representing of real-world equipment, and local user avatars in a virtual metaverse to a remote operator;
- Fig. 9: illustrates a flow chart of a method for operating an automation system, according to another embodiment of the present disclosure;
- Fig. 10: illustrates a portion of an industrial plant having equipment located proximate to a user; and
- Fig. 11: illustrates a flow chart of a method for controlling an automation system, according to yet another embodiment of the present disclosure.

### DETAILED DESCRIPTION OF THE INVENTION

The descriptions of the various embodiments of the present invention have been presented for purposes of illustration and are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

"Industrial plant" or "plant" may refer, without limitation, to any technical infrastructure that is used for an industrial purpose of manufacturing, producing or processing of one or more industrial products, i.e., a manufacturing or production process or a processing performed by the industrial plant. The industrial product can, for example, be any physical product, such as a chemical, a biological, a pharmaceutical, a food, a beverage, a textile, a metal, a plastic, a semiconductor. Additionally, or alternatively, the industrial product can even be a service product, for example, recovery or waste treatment such as recycling, chemical treatment such as breakdown or dissolution into one or more chemical products. Accordingly, the industrial plant may be one or more of a chemical plant, a process plant, a pharmaceutical plant, a fossil fuel processing facility such as an oil and/or a natural gas well, a refinery, a petrochemical plant, a cracking plant, and the like. The industrial plant can even be any of a distillery, a treatment plant, or a recycling plant. The industrial plant can even be a combination of any of the examples given above or their likes.

The infrastructure may comprise equipment or process units such as any one or more of a heat exchanger, a column such as a fractionating column, a furnace, a reaction chamber, a cracking unit, a storage tank, an extruder, a pelletizer, a precipitator, a blender, a mixer, a cutter, a curing tube, a vaporizer, a filter, a sieve, a pipeline, a stack, a filter, a valve, an actuator, a mill, a transformer, a conveying system, a circuit breaker, a machinery e.g., a heavy duty rotating equipment such as a turbine, a generator, a pulverizer, a compressor, an industrial fan, a pump, a transport element such as a conveyor system, a motor, etc.

Further, an industrial plant typically comprises a plurality of sensors and at least one control system for controlling at least one parameter related to the process, or process parameter, in the plant. Such control functions are usually performed by the control system or controller in response to at least one measurement signal from at least one of the sensors. The controller or control system of the plant may be implemented as a distributed control system ("DCS") and/or a programmable logic controller ("PLC").

Thus, at least some of the equipment or process units of the industrial plant may be monitored and/or controlled for producing one or more of the industrial products. The monitoring and/or controlling may even be done for optimizing the production of the one or more products. The equipment or process units may be monitored and/or controlled via a controller, such as DCS, in response to one or more signals from one or more sensors. In addition, the plant may even comprise at least one programmable logic controller ("PLC") for control- ling some of the processes. The industrial plant may typically comprise a plurality of sensors which may be distributed in the industrial plant for monitoring and/or controlling purposes. Such sensors may generate a large amount of data. The sensors may or may not be considered a part of the equipment. As such, production, such as chemical and/or service production, can be a data heavy environment. Accordingly, each industrial plant may produce a large amount of process related data. Those skilled in the art will appreciate that the industrial plant usually may comprise instrumentation that can include different types of sensors. Sensors may be used for measuring one or more process parameters and/or for measuring equipment operating conditions or parameters related to the equipment or the process units. For example, sensors may be used for measuring a process parameter such as a flowrate within a pipeline, a level inside a tank, a temperature of a furnace, a chemical composition of a gas, etc., and some sensors can be used for measuring vibration of a pulverizer, a speed of a fan, an opening of a valve, a corrosion of a pipeline, a voltage across a transformer, etc. The difference between these sensors cannot only be based on the parameter that they sense, but it may even be the sensing principle that the respective sensor uses. Some examples of sensors based on the parameter that they sense may comprise: Temperature sensors, pressure sensors, radiation sensors such as light sensors, flow sensors, vibration sensors, displacement sensors and chemical sensors, such as those for detecting a specific matter such as a gas. Examples of sensors that differ in terms of the sensing principle that they employ may for example be: piezoelectric sensors, piezoresistive sensors, thermocouples, impedance sensors such as capacitive sensors and resistive sensors, and so forth.

The industrial plant may even be part of a plurality of industrial plants. The term "plurality of industrial plants" as used herein is a broad term and is to be given its ordinary and customary meaning to a person of ordinary skill in the art and is not to be limited to a special or customized meaning. The term specifically may refer, without limitation, to a compound of at least two industrial plants having at least one common industrial purpose. Specifically, the plurality of industrial plants may comprise at least two, at least five, at least ten or even more industrial plants being physically and/or chemically coupled. The plurality of industrial plants may be coupled such that the industrial plants forming the plurality of industrial plants may share one or more of their value chains, educts and/or products. The plurality of industrial plants may also be referred to as a compound, a compound site, a "Verbund" or a "Verbund site". Further, the value chain production of the plurality of industrial plants via various intermediate products to an end product may be decentralized in various locations, such as in various industrial plants, or integrated in the Verbund site or a chemical park. Such Verbund sites or chemical parks may be or may comprise one or more industrial plants, where products manufactured in the at least one industrial plant can serve as a feedstock for another industrial plant.

An "automation system" as used herein refers to a system for automated control of process such as, for example, chemical, oil refineries, paper and pulp factories. The automation system can use a network to interconnect sensors, controllers, operator terminals and actuators. It may be based on open standards or on proprietary standards. Process automation may be used for operating power plants and factories in different types of industries more efficiently and safely.

"Production process" refers to any industrial process which when, used on, or applied to the input material provides the product. The product can be, for example, a mechanical product, an electronical product, and/or a chemical product. The production process can thus be any manufacturing or treatment process or a combination of a plurality of processes that are used for obtaining the chemical product. The production process may even include packaging and/or stacking of the product.

The terms "to manufacture", "to produce" or "to process" will be used interchangeably in the context of the production process. The terms may encompass any kind of application of an industrial process to the input material that results in one or more products.

"Chemical product" in this disclosure may refer to any industrial product, such as chemical, pharmaceutical, nutritional, cosmetic, or biological product, or even any of their combination. The chemical product may be either consist entirely of natural components, or it may at least partially comprise one or more synthetic components. Some non-limiting examples of the chemical product are, organic or inorganic compositions, monomers, polymers, foams, pesticides, herbicides, fertilizers, feed, nutrition products, precursors, pharmaceuticals or treatment products, or any one or more of their components or active ingredients. In some cases, the chemical product may even be a product usable by an end-user or consumer, for example, a cosmetic or pharmaceutical composition. The chemical product may even be a product that is usable for making further one or more products, for example, the chemical product may be a synthetic foam usable for manufacturing soles for shoes, or a coating usable for automobile exterior. The chemical product may be in any form, for example, in the form of solid, semi-solid, paste, liquid, emulsion, solution, pellets, granules, or powder.

The production process may be continuous, in campaigns, for example, when based on catalysts which require recovery, it may be a batch chemical production process. One main difference between these production types is in the frequencies occurring in the data that is generated during production. For example, in a batch process the production data extends from start of the production process to the last batch over different batches that have been produced in that run. In a continues setting, the data is more continuous with potential shifts in operation of the production and/or with maintenance driven down times.

"Process parameters" may refer to any of the production process related variables, for example any one or more of, temperature, pressure, time, level, etc. A process parameter may indicate the current state of an equipment, equipment part, a material or manufactured good. According to some embodiments, one or more of the process parameters indicate the operation mode of an equipment or equipment part. A process parameter may be measured by a sensor. Other process parameters may be a desired parameter value or value range and may be set and/or dynamically modified by a user. According to examples, a process parameter can be a numerical or binary signal value, measured during the production process, for example, via the one or more sensors. Preferably, the process parameters are received and stored in association with temporal information indicating the time of measuring the process parameter.

"Input material" or "raw material" may refer to at least one feedstock or unprocessed material that is used for producing the chemical product. The input material may be any organic or inorganic sub- stance or even their combination. Thus, the input material may even be a mixture or it may comprise a plurality of organic and/or inorganic components in any form. In some cases, the input material may even be an intermediate processed material, for example from an upstream processing facility or plant.

A "spatial database system" as used herein is a software application designed to allow the definition, creation, querying, update, and administration of spatial databases.

A "spatial database" as used herein is a database that supports database operations optimized to store and query data that represents objects defined in a geometric space. A spatial database system allows representing simple geometric objects such as points, lines and polygons and optionally also more complex structures such as 3D objects, topological coverages, and/or linear networks. While typical databases are designed to manage various numeric and character types of data, spatial databases comprise additional functionality for processing spatial data objects efficiently. Spatial data objects may also be referred to as "spatial primitives" or "simple geometric objects". The term "geometry" may be used to refer to individual spatial data objects and for aggregations of spatial data objects.

A "spatial database operation" as used herein is a database routine that is configured for analyzing spatial information of one or more spatial data objects. The spatial database operations are typically speed-optimized to efficiently process the spatial data objects by using a spatial index created for a plurality of spatial data objects. For example, a spatial database may support one or more of the following spatial database operations: spatial measurements (e.g. computing the line length, the area of a polygon, the distance between spatial data objects), spatial functions (modifying existing spatial data objects to create new ones, for example by providing a minimum bounding rectangle around them, intersecting spatial data objects, merging spatial data objects); spatial predicates (performing true/false queries about spatial relationships between spatial data objects for checking e.g. if polygons overlap or are within a maximum distance from another spatial data object), and others.

A "streaming database system" as used herein is a database system which is accessible via a subscription-based streaming service. The data inside a streaming database system is often split into two tiers. The raw input, often called "streams," are immutable, append-only sequences of events. They're meant to be a historical record of what happened and when. The second tier is built from watching the streams and constructing summaries, often statistical, about the events. They might, for instance, count the number of times that an event happened each day over the last month or find the average value over each week in a year. The analysis is usually stored in tables that are often similar in structure and behavior to traditional relational databases. Indeed, according to embodiments, the streaming services are connected with and/or are based upon a traditional database for these results. Using a streaming database may have the advantage that the size of the data can be reduced and storage costs can be saved. For example, a parameter value collected by a sensor of an equipment every second may be received via a streaming interface with an average computed over a day. Storing only statistically aggregated parameter values of at least some of the process parameters can make long-term tracking technically feasible.

In a further beneficial aspect, streaming databases make it simpler for developers to integrate the parameter values received via one or more streams, because in contrast to traditional databases where the sequence of INSERT or DELETE events is hidden in an internal journal or ledger, the streams are directly accessible in a streaming database system. Developers can adjust how the streams of new parameter values are statistically aggregated and stored in tabular form. Furthermore, streaming database systems support a subscription-based data retrieval, e.g. for dynamically determining which equipment is in spatial proximity to a user wearing the AR-glasses, whereby the equipment and/or the user may change position. The user may subscribe to a service using his or her current position as argument or condition. The service will continuously and automatically determine if an equipment is in spatial proximity to the user and will cause the executable program logic of the AR glasses to generate and display a GUI with equipment data selectively of equipment in spatial proximity to the user. Each movement of the user wearing the AR glasses may automatically trigger an update of the subscribed streaming service with the new position information of the user. For instance, Oracle Streams, Apache Kafka, or IBM's "Streams" can be used as streaming database systems.

The expression "graph database system" as used herein is a database system that uses graph structures for semantic queries with nodes, edges, and properties to represent and store data. A key concept a graph database system is the graph (or edge or relationship). The graph relates the data items in the store (e.g., equipment and associated task data records, position information, set parameters or measured parameters) to a collection of nodes and edges, the edges representing the relationships between the nodes. The relationships allow data in the store to be linked together directly and, in many cases, retrieved with one operation. Graph databases hold the relationships between data as a priority. Querying relationships is fast because they are perpetually stored in the database. Relationships can be intuitively visualized using graph databases, making them useful for heavily inter-connected data. For example, according to embodiments, the graph represents equipment (e.g., machines, tools and/or robots), equipment components and sub-components thereof in multiple different hierarchical layers. Once a user approaches a particular equipment and reaches spatial proximity to this equipment, the graph database system can be used for quickly retrieving not only the data of the one single node representing this particular equipment, but also retrieving data for any equipment component or sub-component (direct child nodes or second, third, or n'th order child nodes) in a single query operation. Hence, once a user is in spatial proximity of the equipment, the executable program logic will receive all relevant parameters of this equipment and its sub-components and may display it via the AR glasses immediately or may cash some of the retrieved data for displaying it later without a further query to the database system. Using a graph database may be particularly advantageous for drill-down analysis for retrieving data relevant for a particular maintenance task for a machine and one or more of its components.

The expression "augmented reality glasses" or "AR glasses" as used herein refer to wearable computer glasses that add information alongside or to what the wearer sees. Superimposing information onto a field of view can be achieved for example through an optical head-mounted display (OHMD) or embedded wireless glasses with an augmented reality overlay. These systems have the capability to reflect projected digital images as well as allowing the user to see through it or see better with it. Some models comprise processors with limited processing capabilities, and which perform only basic tasks, such as serving as a front-end display for a remote system having a greater amount of CPU capacity, as in the case of smart glasses utilizing cellular technology or Wi-Fi. Modern AR glasses are effectively wearable computers which can run self-contained mobile apps. According to preferred embodiments, the AR glasses are handsfree and can communicate with one or more external software programs, e.g., the executable program logic of the AR system, via natural language voice commands, and/or optical sensors in combination with gesture recognition functions.

According to embodiments, AR glasses may collect information from internal or external sensors, e.g., in order to determine the position and/or orientation of the wearer and may be configured to represent a part of the positioning system of the AR system. According to embodiments, the AR glasses support wireless technologies like Bluetooth and/or Wi-Fi for data exchange with other components of the AR system, and/or GPS for position determination. The AR glasses may comprise an acoustic output interface configured to output sound, e.g., the voice of other users and/or alarm messages generated by the AR-system, e.g., by the executable program logic.

The expression "positioning system" as used herein is a monolithic or distributed technical system configured to determine position of an entity, e.g., a user or another physical object. For example, some AR glasses comprise GPS sensors or indoor position sensors, gyroscopes and/or cameras which are configured to continuously acquire data which allows to determine the current position of the user wearing the AR glasses.

The expression "spatial anchors" as used herein is a software function that allows positioning virtual reality objects such as holograms, virtual GUIs or manuals, at defined distance relative to said anchor. The anchor represents a coordinate system which is mapped and bound to the coordinate system of the real world. According to some embodiments, the anchors are created by or with the help of an executable program logic interoperable with the AR glasses, e.g., an augmented reality application. The anchors are then stored in the database system for making the anchors accessible to other users, e.g., remote users. A virtual reality application configured to create a virtual reality for the remote user can be configured to read the anchor(s) created by the user wearing the AR glasses and to create and display some virtual objects at a defined distance and orientation relative to the anchor. The augmented reality application of the user wearing the AR glasses may do the same. Thereby, the spatial anchor may allow the two users to share the same visual experience. For example, the virtual object displayed at the predefined distance and orientation of the anchor can be a virtual representation of an equipment or equipment part or of a GUI designed for allowing a user to control the equipment. According to one example, the spatial anchors can be implemented using Microsoft Azure technology.

The term "avatar" as used herein is a graphical representation of a user or the user's character or persona. It may take a two-dimensional or a three-dimensional form when displayed via AR-glasses.

The expression "in the vicinity" or "in proximity" of a user (or other object/entity) or "proximate to a user" can mean, for example, within a user-defined or predefined maximum distance from this user (or from the other object/entity). For example, the maximum distance can be less than 200m, or less than 10 m, or less than 5 m, or less than 2 m, or less than 1m. The maximum distance may also be specified in the form of a 3D object, e.g., a hemisphere or a cylinder, or in the form of a 2D object, e.g., a circle, an ellipse or a polygon, having, in some instances, major and/or minor axes defined, so the distance threshold for "proximate" and "non-proximate" objects may be different for different dimensions within the 3D coordinate system of the real world.

According to some embodiments, a "bounding space proximate to a user" is a bounding space surrounding the user. According to some embodiments, a "bounding space proximate to a user" is a bounding space not surrounding the user but being in proximity to the user. The maximum distance for a bounding space being "proximate" to a user may vary depending on the embodiment. According to some examples, a bounding space being "proximate" to a user is a bounding space whose which at the most remote point from the user is located less than 200m, or less than 10 m, or less than 5 m, or less than 2 m, or less than 1m from the user.

For example, in some examples, the bounding space may be a bounding space comprising the user and having a radius within the range of 2m to 200 m. This may be advantageous e.g. for alarm messages which may be associated with machines located in different rooms or floors. In some further examples, the maximum distance for a bounding space being "proximate" to a user may be e.g. a bounding space whose most remote point from the user is less than 10, e.g. less than 5 m away from the user. This maximum distance may be useful e.g. for virtual objects comprising videos and texts.

"Computing unit" may comprise, or it may be, a processing means or computer processor such as a microprocessor, microcontroller, or their like, having one or more processing cores. In some cases, the computing unit may at least partially be a part of the equipment, for example it may be a process controller such as programmable logic controller ("PLC") or a distributed control system ("DCS"), and/or it may be at least partially a remote server. Accordingly, the computing unit may receive one or more input signals from one or more sensors operatively connected to the equipment. If the computing unit is not a part of the equipment, it may receive one or more input signals from the equipment. Alternatively, or in addition, the computing unit may control one or more actuators or switches operatively coupled to the equipment. The one or more actuators or switches operatively may even be a part of the equipment.

"Memory storage" may refer to a device for storage of information, in the form of data, in a suitable storage medium. Preferably, the memory storage is a digital storage suitable for storing the information in a digital form which is machine-readable, for example digital data that are readable via a computer processor. The memory can be a transitory or non-transitory storage of information. The memory storage may thus be realized as a digital memory storage device that is readable by a computer processor. Further preferably, the memory storage on the digital memory storage device may also be manipulated via a computer processor. For example, any part of the data recorded on the digital memory storage device may be written and/or erased and/or overwritten, partially or wholly, with new data by the computer processor.

Accordingly, the computing unit may be able to manipulate one or more parameters related to the production process by controlling any one or more of the actuators or switches and/or end effector units, for example via manipulating one or more of the equipment operating conditions. The controlling is preferably done in response to the one or more signals retrieved from the equipment.

"Interface" may be a hardware and/or a software component, either at least partially a part of the equipment, or a part of another computing unit where the object identifier is provided. In some cases, the interface may also connect to at least one network, for example, for interfacing two pieces of hardware components and/or protocol layers in the network. For example, the interface may be an interface between the equipment and the computing unit. In some cases, the equipment may be communicatively coupled to the computing unit via the network. Thus, the interface may even be a network interface, or it may comprise the net- work interface. In some cases, the interface may even be a connectivity interface, or it may comprise the connectivity interface.

"Network interface" refers to a device or a group of one or more hardware and/or software components that allow an operative connection with the network.

"Connectivity interface" refers to a software and/or hardware interface for establishing communication such as transfer or exchange or signals or data. The communication may either be wired, or it may be wireless. Connectivity interface is preferably based on or it supports one or more communication protocols. The communication protocol may a wireless protocol, for example: short distance communication protocol such as Bluetooth^{®}, or WiFi, or long communication protocol such as cellular or mobile network, for example, second-generation cellular network or ("2G"), 3G, 4G, Long-Term Evolution ("LTE"), or 5G. Alternatively, or in addition, the connectivity interface may even be based on a proprietary short distance or long distance protocol. The connectivity interface may support any one or more standards and/or proprietary protocols. The connectivity interface and the network interface may either be the same unit or they may be different units.

"Network" discussed herein may be any suitable kind of data transmission medium, wired, wireless, or their combination. A specific kind of network is not limiting to the scope or generality of the present teachings. The network can hence refer to any suitable arbitrary interconnection between at least one communication endpoint to another communication endpoint. Network may comprise one or more distribution points, routers or other types of communication hardware. The interconnection of the network may be formed by means of physically hard wiring, optical and/or wireless radio-frequency methods. The network specifically may be or may comprise a physical network fully or partially made by hardwiring, such as a fiber-optical network or a network fully or partially made by electrically conductive cables or a combination thereof. The network may at least partially comprise the internet.

"Equipment" may refer to any one or more assets within the industrial plant. As non-limiting examples, the equipment may refer to any one or more, or any of their combination of, computing units or controllers such as programmable logic controller ("PLC") or distributed control system ("DCS"), sensors, actuators, end effector units, transport elements such as conveyor systems, heat exchangers such as heaters, furnaces, cooling units, reactors, mixers, millers, choppers, compressors, slicers, extruders, dryers, sprayers, pressure or vacuum chambers, tubes, bins, silos and any other kind of apparatus which is used directly or indirectly for or during production in the industrial plant. Preferably, the equipment refers specifically to those assets, apparatuses or components which are involved directly or indirectly in the production process. More preferably, those assets, apparatuses or components which can influence the performance of the chemical product. An equipment may be buffered, or they may be unbuffered. Moreover, the equipment may involve mixing or no mixing, separation or no separation. Some non-limiting examples of unbuffered equipment without mixing are, conveyor system or belt, extruder, pelletizer, and heat exchanger. Some non-limiting examples of buffered equipment without mixing are, buffer silo, bins, etc. Some non-limiting examples of buffered equipment with mixing are, silo with mixer, mixing vessel, cutting mill, double cone blender, curing tube, etc. Some non-limiting examples of unbuffered equipment with mixing are, static or dynamic mixer, etc. Some non-limiting examples of buffered equipment with separation are, column, separator, extraction, thin film vaporizer, filter, sieve, etc. The equipment may even be or it may include a storage or packaging element such as, octabin filling, drum, bag, tank truck.

"Equipment operating conditions" refers to any characteristics or values that represent the state of the equipment, for example, any one or more of, setpoint, controller output, production sequence, calibration status, any equipment related warning, vibration measurement, speed, temperature, fouling value such as filter differential pressure, maintenance date, etc.

"Parameter" in this context refers to any relevant physical or chemical characteristic and/or a measure thereof, such as temperature, direction, position, quantity, density, weight, color, moisture, speed, acceleration, rate of change, pressure, force, distance, pH, concentration and composition. The parameter may also refer to a presence or lack thereof of a certain characteristic.

"Actuator" refers to any component of that is responsible for moving and controlling a mechanism related to an equipment such as a machine, directly or indirectly. The actuator may be a valve, motor, a drive, or their likes. The actuator may be operable electrically, hydraulically, pneumatically, or any of their combination.

"Computer processor" refers to an arbitrary logic circuitry configured for performing basic operations of a computer or system, and/or, generally, to a device which is configured for performing calculations or logic operations. In particular, the processing means or computer processor may be configured for processing basic instructions that drive the computer or system. As an example, the processing means or computer processor may comprise at least one arithmetic logic unit ("ALU"), at least one floating-point unit ("FPU"), such as a math coprocessor or a numeric coprocessor, a plurality of registers, specifically registers configured for supplying operands to the ALU and storing results of operations, and a memory, such as an L1 and L2 cache memory. In particular, the processing means or computer processor may be a multicore processor. Specifically, the processing means or computer processor may be or may comprise a Central Processing Unit ("CPU"). The processing means or computer processor may be a ("CISC") Complex Instruction Set Computing microprocessor, Reduced Instruction Set Computing ("RISC") microprocessor, Very Long Instruction Word ("VLIW") microprocessor, or a processor implementing other instruction sets or processors implementing a combination of instruction sets. The processing means may also be one or more special-purpose processing devices such as an Application-Specific Integrated Circuit ("ASIC"), a Field Programmable Gate Array ("FPGA"), a Complex Programmable Logic Device ("CPLD"), a Digital Signal Processor ("DSP"), a network processor, or the like. The methods, systems and devices described herein may be implemented as software in a DSP, in a micro-controller, or in any other side-processor or as hardware circuit within an ASIC, CPLD, or FPGA. It is to be understood that the term processing means or processor may also refer to one or more processing devices, such as a distributed system of processing devices located across multiple computer systems (e.g., cloud computing), and is not limited to a single device unless otherwise specified.

"Computer-readable data medium" or carrier includes any suitable data storage device or computer readable memory on which is stored one or more sets of instructions (e.g., software) embodying any one or more of the methodologies or functions described herein. The instructions may also reside, completely or at least partially, within the main memory and/or within the processor during execution thereof by the computing unit, main memory, and processing device, which may constitute computer-readable storage media. The instructions may further be transmitted or received over a network via a network interface device.

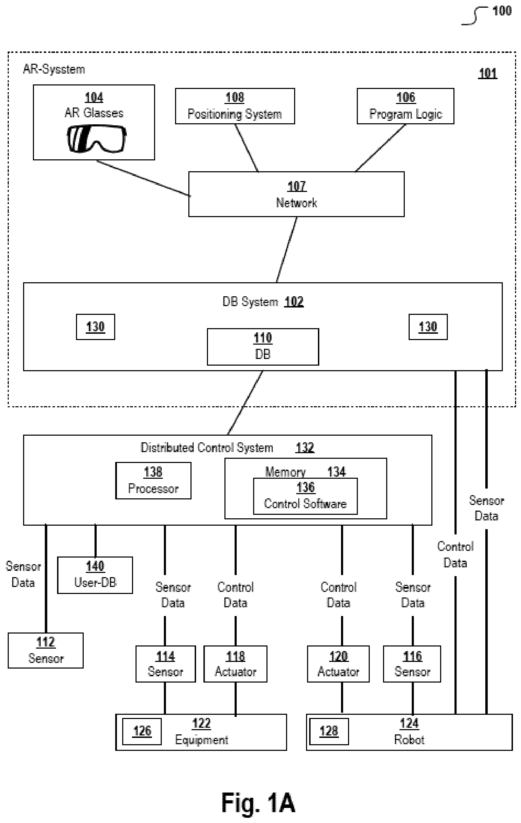

Fig. 1A illustrates an automation system 100 for controlling an automated production process of an industrial plant. The industrial plant includes a plurality of equipment 122, 124 for performing the production process. In one embodiment, the plurality of equipment are spatially distributed in the industrial plant.

The automation system includes an augmented reality system including a database system 102 configured to store data and spatial coordinates associated with respective equipment of the plurality of equipment, augmented reality (AR) glasses 104 configured to display the data, and executable program logic 106 coupled to the augmented reality glasses 104. For example, the AR glasses can be HoloLens from Microsoft, or iOS-based devices supporting e.g., ARKit, or Android-based devices supporting ARCore or similar libraries. The executable program logic 106 can be integrated into the AR glasses or may be at least partially external to the glasses and operatively coupled to the AR glasses via a wireless data exchange interface. The program logic may be used to generate GUIs and/or render digital geometric objects for display via the AR glasses. In addition, the executable program logic may comprise interfaces for exchanging data with the database system 102 and a positioning system 108. In one embodiment, the augmented reality system includes the AR glasses 104 and the program logic 106, and the database system 102 is either a component of the distributed control system 132 or a self-contained object or component of the plant that is communicatively coupled to augmented reality system and/or the distributed control system 132. In one embodiment, the augmented reality system also includes a network 107 for communicatively coupling the AR glasses 104 to the database system 102. The augmented reality glasses 104 are associated with a human operator (i.e., an AR user), and includes components, such as electronics, optics (e.g., displays, lenses, light sources), power source, local memory, processing units, and executable software, such as AR apps known to those of skill in the art, to enable the AR glasses to provide an enhanced (i.e., augmented) vision of the plant environment as viewed through the glasses by a user. The AR glasses may also comprise an acoustic output interface, e.g., integrated loudspeakers, and/or a microphone for enabling the user wearing the glasses to communicate via voice with one or more remote users.

In one embodiment, the AR glasses 104 provide an overlay of the data, also referred to as AR objects or "virtual objects", representative of data such as text, photos, videos, holograms, GUIs, technical handbooks, and/or graphs, on a display of the AR glasses as the user looks through the display of the AR glasses at different objects in the plant, such as different pieces of equipment, sensors, actuators, plant framework (e.g., floors, ceilings, walls, scaffolding, storage areas, etc.). In one embodiment, the type and content of the AR objects displayed depend upon characteristics of the user of the AR glasses, the location of the user in the plant and/or the line of sight of the user, as will be described in further detail below.

In one embodiment, the executable program logic 106 is configured to receive an up-to-date spatial position of the user from a positioning system, such as positioning system 108. In one embodiment, the positioning system 108 is configured for sensing the spatial position of the user in the plant.

According to an embodiment, the positioning system 108 comprises one or more sensors for dynamically identifying the position and/or orientation of the user wearing the AR glasses. For example, the positioning system may comprise a GPS module or an indoor-positioning system. In addition, or alternatively, the positioning system may comprise one or more cameras which are used for capturing gestures of the hands and arms of the user while interacting with virtual Objects such as GUIs displayed via the AR glasses. According to embodiments, the positioning system 108 is configured to generate and/or use a spatial mapping mesh covering at least a portion of the plant. For example, spatial mapping, via use of a spatial mapping mesh, enables anchoring AR objects on or near real surfaces of objects in the plant, such as surfaces of equipment, sensors, actuators, or other surfaces in the plant, including surfaces of plant infrastructure. Embodiments of the present invention include use of commercially available spatial mapping mesh positioning systems, some of which are commercially available as apps to be executed by the AR glasses 104 and/or program logic 106. One such system is World Locking Tools, available as an open-source code.

In addition, or alternatively, embodiments of the present invention include pre-built spatial maps (i.e., spatial meshes) that define surfaces of objects in the plant, where each surface of an object has a plurality of mesh points to which respective AR objects can be placed or locked, and by relating the coordinates of a locking mesh point to the AR coordinates in a potentially moving AR coordinate system of the AR glasses, the AR object appears locked in position relative to its position with respect to the plant object to which is corresponds. In one embodiment, one or more spatial surfaces of objects in the plant are represented by a triangle mesh, to which AR objects may be anchored. Thus, an AR object put in position relative to physical world features will stay fixed relative to those features, independent of movement of the user or direction of view of the user through the AR glasses. For example, Azure Spatial Anchors Technology of Microsoft may be used for developing mixed reality applications which support AR glasses of various manufacturers. Azure Spatial Anchors enables developing mixed reality applications which designate precise points of interest, so called spatial anchors, and to recall those points of interest from one or more supported devices such that multiple local and/or remote users can share the same virtual coordinate system and virtual objects included therein. According to an embodiment, the spatial mapping mesh includes or is connected with spatial anchors. At least some of the spatial anchors can be interconnected, and form, for example, one or more groups of interconnected spatial anchors having predefined relative distances from each other. In one embodiment, one or more spatial anchors connected to any particular spatial anchor are defined to be one or more nearest neighbour spatial anchors. In one embodiment, each spatial anchor relates a coordinate system of the augmented reality system for the display of the data (e.g., an AR object) to the real-world coordinate system. In other words, the positioning system 108 can be configured to merge one or more spatial anchors as viewed through the AR glasses (i.e., the coordinates of the one or more spatial anchors in an augmented reality coordinate system associated with the AR glasses), with the real-world spatial coordinates of the real-world objects to which the spatial anchors belong, as stored in the database system in the form of a spatial mapping mesh, to obtain the real-world spatial position of the user of the AR glasses in the plant.

In another embodiment, the positioning system 108 is an indoor positioning system. The AR glasses 104 and/or the program logic 106 are configured to receive signals from Bluetooth beacons distributed throughout the plant and determine location based on Received Signal Strength Indication (RSSI) of the received Bluetooth Beacon signals. Alternatively, and particular advantageous in plant environments having large amounts of obstacles (i.e., non-open-floor layouts) that may result in multipath effects, shadow fading and signal blockage, the AR glasses 104 and/or the program logic 106 are configured to receive cellular network and Bluetooth Beacon signals, as described in "Indoor Positioning System With Cellular Network Assistance Based on Received Signal Strength Indication of Beacon," December 30, 2019, p. 6691-6703, IEEE Access, which is incorporated herein by reference. In this embodiment, RSSI values of the received Bluetooth Beacon signals are signal processed (missing values replaced and outlier values removed via filtering) for generating a smoother signal over range. Then, the cell in which the AR glasses are located is determined according to the strongest four RSSI values, and a weighted multi-point positioning algorithm with cellular network assistance is used to calculate the real-time location of the AR glasses (i.e., the location of the AR user).

In yet another embodiment, the positioning system 108 is a cellular positioning system based on the 5G mobile radio standard. The 5G positioning system offers extremely high network reliability and high positioning accuracy. In a further embodiment, the positioning system is a GPS positioning system, where the AR glasses include a GPS receiver and corresponding software and/or GPS app configured to determine the spatial position of the AR glasses.

The executable program logic 106 is further configured to receive data, from the database system 102, corresponding to equipment that are located in a proximity of the up-to-date spatial position of the user, and control the augmented reality glasses 104 for display of at least some of the received data. In one embodiment, the executable program logic 106 is configured to receive data, from the database system 102, corresponding to any objects of the plant that is located in a proximity of the up-to-date spatial position of the user.

In one embodiment, the executable program logic 106, upon receiving the up-to-date spatial position of the user wearing the AR glasses 104 from the positioning system 108, determines the coordinates of a bounding space proximate to the user wearing the AR glasses 104. According to embodiments, the executable program logic 106 is configured to determine the coordinates of the bounding space proximate to the user based upon one or more of the following bounding space parameters: the up-to-date spatial position of the user, the line of sight of the user, a number of equipment proximate to the user or in the line of sight of the user (e.g., a density of equipment proximity to the user and/or in the line of sight of the user), a number and/or data type of the virtual objects corresponding to the equipment in the proximity of the user and/or in the line of sight of the user, configuration of the walls, floors and/or ceiling of the plant infrastructure in the proximity of the user, and the one or more user roles assigned to a user wearing the AR glasses 104. The bounding space is thus defined by the coordinates that define a bounding surface of the bounding space, as determined by the program logic. The program logic may also be configured to interpolate between the determined coordinates to add more coordinates that define the bounding surface of the bounding space with more resolution.

According to embodiments, the bounding space is a 3D bounding space that is located within (i.e. defined by) a bounding surface or a 2D bounding space that is located within (i.e. defined by) a bounding "surface" that lies in a plane. Thus, the term "bounding surface" is defined for the purposes of describing the embodiments of the present disclosure as being a 2D surface defined by a set of coordinates that enclose a 3D bounding space or a 1D "surface" (i.e., a continuous line, e.g., a curved line that defines the circumference of a circle, as an exemplary non-limiting example) defined by a set of coordinates that enclose a 2D bounding space. In addition, the term "bounding space" is defined for the purposes of describing the embodiments of the present disclosure as including 3D and 2D bounding spaces.

In one embodiment, if the up-to-date spatial position of the user places the user outside of the plant boundary or inside areas of the plant that have been designated off-limits for reasons such as safeguarding proprietary information or limiting access to extremely hazardous areas (e.g., high voltages, air contaminants, infrastructure repair), then the program logic determines that the bounding space does not exist, or alternatively that the bounding space has very limited lengths in particular directions, such as directions the point towards hazardous areas or areas of high propriety, for example. Thus, the program logic may be configured to determine the coordinates of the bounding space based upon an up-to-date spatial position of the user wearing the AR glasses 104.

In another embodiment, the program logic may determine and use a line of sight between the user wearing the AR glasses and a virtual object for determining whether or not the virtual object should be displayed. For example, the executable program logic may dynamically receive position information of one or more physical objects such as equipment, materials and/or products. The executable program logic may determine of one or more of these physical objects are located on the line of sight between the user and the virtual object to be displayed. In one embodiment, if the program logic determines that one or more physical objects in the line of sight of the user completely or partially blocks the view of the user, the control logic does not display the hidden parts of the virtual object. If the virtual object is hidden by the physical objects on the line of sight completely, the virtual object is not displayed. The ratio of the hidden parts of a virtual object can be defined, for example,

In another embodiment, the program logic may determine the coordinates of the bounding space based on a density of equipment in the proximity of the user. For example, the density of equipment in proximity of the user (e.g., equipment surrounding the user and in proximity to the user) and/or the density of equipment in the view direction of the user (e.g., equipment in proximity to the user and in the view direction of the user as determined by the AR glasses orientation or eye orientation) can be defined as a number of equipment per unit volume for a three-dimensional bounding space and the number of equipment per unit area for a two-dimensional bounding space. Values for the density of equipment can be associated with spatial positions in the plant and stored, for example, in the database 130 of the database system 102, retrievable by the program logic 106. In one embodiment, a bounding radius parameter is determined based on the density of equipment. For example, the bounding radius parameter can be inversely proportional to the density of equipment. Thus, when the spatial position of the user wearing the AR glasses corresponds to a higher-than-average density of equipment, the program logic provides a lower-than-average bounding radius parameter. Once the bounding radius is determined, the program logic uses, for example, the bounding radius parameter to define an initial spherical bounding surface (or an initial hemispherical bounding surface, where the flat surface of the hemisphere is coincident with the floor of the plant). The program logic can then modify the initial spherical bounding surface (or initial circular bounding surface for embodiments having a 2D bounding space) having an initial radius equal to the bounding radius parameter, based on other bounding space parameters, such the up-to-date spatial position of the user and/or the orientation of the AR glasses and/or the orientation of the eyes the user, as discussed above. That is, the program logic may modify the initial spherical bounding surface for forming a 3D non-spherical bounding surface whose coordinates are further based on any of the other bounding space parameters, as discussed above and further below. By making the bounding radius parameter inversely proportional to the density of equipment, the embodiments of the present disclosure limit the amount of information simultaneously provided to the user of the AR glasses, thereby not overwhelming the user with too much data and reserving system bandwidth for other tasks.

In another embodiment, the program logic may determine the coordinates of the bounding space based on a number and/or data type of the virtual objects corresponding to the equipment in the proximity of the user and/or in the view direction of the user. For example, the program logic may determine the total number of virtual objects corresponding to equipment in the proximity of the user. In one embodiment the program logic determines the total number of virtual objects as a function of a radius of a sphere, centred on the user, within which respective equipment is located. Then, based upon a predefined virtual object maximum parameter, that can be set and/or adjusted by an operator, the program logic determines the maximum radius such that the difference between the total number of virtual objects and the virtual object maximum is minimized without the total number of virtual objects exceeding the virtual object maximum.

In another embodiment, given the users spatial position (e.g., the up-to-date spatial position), the program logic determines the total number of virtual objects as a function of distance from the user as measured along the view direction of the user wearing the AR glasses, within which respective equipment corresponding to the total number of virtual objects is located. Then, based upon a predefined line-of-sight virtual object maximum parameter, that can be set and/or adjusted by an operator, the program logic determines the maximum distance such that the difference between the total number of virtual objects and the line-of-sight virtual object maximum is minimized without the total number of virtual objects exceeding the line-of-sight virtual object maximum. In a further embodiment, the program logic determines a plurality of maximum distances, one for each different view directions of the user positioned at the given user spatial position, where each maximum distance is determined based on using the line-of-sight virtual object maximum parameter as discussed above. The plurality of maximum distances along the respective plurality of line-of-sights then defines the plurality of coordinates on the bounding surface, or in other words, defines the bounding surface and thus defines the bounding space (i.e., the space enclosed by the bounding surface). The bounding surface may have any shape and is dependent only upon the plurality of maximum distances determined along the plurality of line-of-sights.

A data type of a virtual object can be, for example, one of video data, text data and audio data. A further data type is alarm data. Alarm data is data of which a user wearing the AR glasses urgently needs to be made aware. Thus, alarm data can be represented by audio data, e.g., beeping sounds or sirens, text data, e.g., flashing red text, or video data, e.g., short, looped video messages, or any combination of two or more of audio data, text data and video data. In one embodiment, display of a virtual object comprised of alarm data by the AR glasses requires no action on the part of the user. Actions include, but are not limited to, a user "clicking" on a virtual object text box, which indicates that text, video or audio data corresponding to a further virtual object is available for display. For purposes of distinguishing audio data, text data and video data used as alarm data from audio data, text data and video data not used as alarm data, the audio data, text data and video data used as alarm data are also referred to for the purposes of the present disclosure as urgent audio data, urgent text data and urgent video data.

In an embodiment, the program logic determines the coordinates of the bounding space based on the data type of the virtual objects corresponding to the equipment in the proximity of the user. For example, a virtual object comprised of alarm data may be preassigned (by an operator of the system) a higher priority of being displayed in comparison to virtual objects comprised of video, text or audio data. Virtual comprised of video text or audio data may also be preassigned display priority values dependent upon the type of data (e.g., in one embodiment, audio data has a higher display priority than text data that has a higher display priority than video data). In one embodiment, a total display priority value at any given line-of-sight distance from the user is defined as the total sum of the display priority vales of the corresponding virtual objects associated with equipment that lie along the line-of-sight between the user and the given line-of-sight distance. An operator may also define a maximum display priority value. In one embodiment, the program logic determines a maximum distance along the line of sight of the user such that the difference between the total display priority value and the maximum display priority value is minimized without the total display priority value exceeding the maximum display priority value. In a further embodiment, the program logic determines a plurality of maximum distances based on display priority values, one for each different line of sight of the user positioned at the given user spatial position. The plurality of maximum distances based on display priority values along the respective plurality of line-of-sights define the plurality of coordinates on the bounding surface, or in other words, define the bounding surface.

In another embodiment, the bounding space is one of two or more data-type specific bounding spaces. As discussed above, the virtual objects comprise objects of data types selected from a group consisting of videos, images, texts, audio files and alarm messages. The executable program logic 106 is configured to dynamically determine the coordinates of a data-type specific bounding space based on the data types of the virtual objects to be displayed to the user wearing the AR-glasses. For example, the user may select, via audio commands to the AR glasses, via selection of a command as displayed by the AR glasses to the user upon initial setup of the AR glasses, for example, or via selection by an operator of the system, a data-type specific bounding space to be used by the system. That is, if the specific bounding space is selected to be (or identified as) an alarm message specific bounding space (also referred to as alarm bounding space), then the program logic determines the coordinates of the bounding space based upon the constraint that only virtual objects comprised of alarm messages will be displayed to the wearer (i.e., user) of the AR glasses. Thus, the program logic is configured to determine line-of-sight maximum distances for a plurality of line-of-sights based on the user's up-to-date spatial position for defining the bounding space and/or radii of bounding spaces surrounding and proximate to the user, as discussed above, based only upon the bounding space including virtual objects comprised of alarm messages.

Advantageously, the program logic provides an alarm message specific bounding space having a size and/or shape that may encompass a greater volume (or area) for the display of a greater number of alarm messages than would otherwise be displayed if the bounding space was not identified as a data-specific bounding space. In other words, the program logic provides data-specific bounding spaces that have sizes and/or shapes different from the sizes and/or shapes of a non-data-specific bounding space (i.e., a bounding space that includes virtual objects of all data types). In this way, the sizes and/or shapes of bounding spaces are tailored to be data specific, thereby providing a bounding space that is "optimized" for viewing a virtual objects of a particular data type, or in other embodiments, for viewing virtual objects comprised of any combination of one or more data types. "Optimization" in the sense of the present disclosure and in accordance with the described embodiments means that the size and/or shape of the bounding space is determined to provide the user with the most meaningful and/or relevant data of which a user should be aware and which can be assimilated by the user without overwhelming the user's cognitive ability to process information, either visually and/or auditorily. The terms "size and/or shape" of a bounding space and "coordinates" of a bounding space, used to describe embodiments that are disclosed throughout the present application, are defined to have the same meaning. That is, once the coordinates of a bounding space are determined, which are the same as the coordinates of the bounding surface that encloses the bounding space, the size and/or shape of the bounding space is also determined.

In another embodiment, the program logic determines the coordinates of the bounding space based on the configuration of the walls, floors and/or ceiling of the plant infrastructure in proximity of the user. For example, the program logic is configured to determine coordinates corresponding to a height of a bounding space based upon the height of a room or an area relative to the spatial position of the user. If the user is in an enclosed or semi-enclosed space, such as a room, the program logic may also be configured to determine one or more lateral dimensions of the bounding space (i.e., dimensions transverse to the height). In one embodiment, the program logic determines the height of the room, compartment, or area proximate to and/or surrounding the user completely or partially, by receiving measurement data from one or more sensors worn by the user. Alternatively, or in addition, the program logic determines the height of the room, compartment or area proximate to and/or surrounding the user completely or partially, as a function of a room-ID, compartment-I D or area-ID detected by a sensor worn by the user. For example, rooms, compartments and/or areas of the plants, such as walls and/or ceilings, and in some embodiments, equipment, may have electronically readable (e.g., scannable) ID tags. The AR glasses may include a scanner, such as a QR code capable scanner, and the program logic may store an assignment table which assigns heights to room-IDs and/or compartment-IDs and/or area IDs.

In another embodiment, the program logic determines the coordinates of the bounding space based on the configuration of the walls, floors and/or ceiling of the plant infrastructure in the proximity of the user in combination with one or more user roles assigned to the user. For example, the executable program logic is configured to receive user credentials from the user wearing the glasses and authenticate the user associated with a user ID. The user may be a new user, for which authentication is required, or the user may already have a registered user account in the user database, including, for example, a user ID. The user ID may be associated with one or more user roles, for example, an "operator" role or a "maintenance" role. In addition, or alternatively, each user role may optionally include one or more user privileges, as discussed previously above.

According to one embodiment, the program logic is configured to receive one or more user roles associated with the user ID. For example, the user role can be that of an "operator", i.e., a user who is obliged to control and/or monitor one or more steps in a production workflow, or of a "maintenance worker", i.e., a user who is obliged to do maintenance word to ensure that the at least one equipment works properly. The program logic is configured to determine the extent of the bounding space, such as determining whether or not the bounding space includes more than one room or more than one floor of the plant, and/or the extent of the bounding space in proximity to a user at any spatial location in the plant, based on the role (or roles) assigned to the user ID. For example, if a user wearing the AR-glasses has a maintenance role, but not an operator role, the user may be presented virtual objects associated with equipment in multiple different rooms and/or floors of the industrial plant in relation to the user's up-to-date spatial position. Since, in general, a maintenance worker is responsible for technically complex tasks which may require in-depth technical knowledge of the equipment which is typically not available or even necessary to a user having an "operator" role, the user having a maintenance role may have much larger sized and/or shaped boundary space to encompass virtual objects associated with wider variety of equipment, even equipment not located in proximity to the user's up-to-date spatial position, such as equipment located in different rooms or on different floors of the plant.

The scope of the present disclosure also includes embodiments in which the program logic uses one or more of the above-described bounding space parameters, e.g., the up-to-date spatial position of the user, the orientation of the AR glasses of the user, the orientation of the eyes of the user, the line of sight of the user, a number of equipment proximate to the user or in the line of sight of the user (e.g., a density of equipment proximity to the user and/or in the line of sight of the user), a number and/or data type of the virtual objects corresponding to the equipment in the proximity of the user and/or in the line of sight of the user, configuration of the walls, floors and/or ceiling of the plant infrastructure in the proximity of the user, and the one or more user roles assigned to a user wearing the AR glasses 104, in any combination, in determining the coordinates of the bounding space in proximity of the user wearing the AR glasses (i.e., the coordinates that define a bounding surface that encloses the bounding space).

In another embodiment, the program logic determines whether the bounding space, as determined by any of the embodiments described above, includes one or more equipment that are not totally within the bounding space. For example, once the program logic determines a bounding space, as defined by a bounding surface that encloses the bounding space, the program logic determines if any equipment having at least one corresponding virtual object located within the bounding space has at least one coordinate located outside of the bounding space. An equipment defined by more than one coordinate, for example, by coordinates that define corners of the equipment, may be bisected by the bounding surface such that some of the coordinates corresponding to the equipment lie within the bounding space and other of the coordinates corresponding to the equipment lie outside the bounding space. In one embodiment, the program logic adjusts the bounding surface that bisects any equipment such that the equipment is completely included within the bounding space, and thus also adjusts the display to include those virtual objects included within the newly adjusted bounding space. In another embodiment, the program logic adjusts the bounding surface that bisects any equipment such that the equipment is completely outside of the bounding space, and thus also adjusts the display to only include those virtual objects included within the newly adjusted bounding space.

Once the program logic 106 has determined the coordinates of a bounding space in proximity to the user wearing the AR glasses 104, or the coordinates of a bounding space having at least portions that are not in proximity to the user wearing the AR glasses 104, which may occur when the program logic uses one or more user roles to determine coordinates of the bounding space, the program logic 106 displays one or more virtual objects to the wearer of the glasses via the AR glasses 104 if and only if the coordinates of the virtual objects are within the bounding space. The displayed virtual objects include data, such as text, video, image, audio, or alarm data. The data is associated with monitoring and/or controlling the automated production process.

For example, in one embodiment the program logic sends the up-to-date spatial position of the user wearing the AR glasses and the coordinates of the bounding space (e.g., the coordinates of the bounding surface the encloses the bounding space) to the database system 102, and receives, from the database system, those virtual objects having coordinates that are contained within the bounding space as defined by the coordinates of the bounding space. Thus, the user (e.g., the wearer) of the AR glasses views an overlay of the virtual objects contained within the bounding space with the real-world objects of the plant. The user can then use the text, image, video, audio and/or alarm data corresponding to the virtual objects displayed to maintain and/or control the respective equipment to which the virtual objects correspond, and/or to acquire operational status, parameter settings, and/or to educate oneself as to how the equipment operates and/or to the role of the different equipment in the production process.

Furthermore, the program logic is configured to continuously update the coordinates of the bounding space and the virtual objects displayed therein as a function of the up-to-date spatial position of the user wearing the AR glasses. In addition, the coordinates of the bounding space is determined as a function of the orientation of the AR glasses and or of the orientation of the eyes (the gaze) of the user wearing the AR glasses. Thus, as the user wearing or operating the AR glasses moves to a different spatial position and/or as the user, although stationary with respect to a spatial position, changes a line-of-sight through the glasses by changing the orientation of the AR glasses (e.g., a user wearing the AR glasses as a head piece moves the head piece through a movement of the user's head), the program logic determines a new bounding space. The program logic 106 then displays one or more virtual objects to the wearer of the glasses via the AR glasses 104 if and only if the coordinates of the virtual objects are within the new bounding space. The virtual objects displayed in the new (i.e., updated) bounding space may include some of the virtual objects displayed in the previous bounding space, dependent on any overlap between the new and previous bounding spaces.

In another embodiment, the program logic is configured to continuously update the coordinates of the bounding space and the virtual objects displayed therein as a function of the up-to-date spatial position of the user wearing the AR glasses. According to some embodiments, also data being indicative of the orientation of the AR glasses is used for determining and updating the bounding space. For example, the AR glasses may comprise a gyroscope and/or accelerometers for determining the orientation of the AR glasses. In addition, or alternatively, the executable program logic determines and updates the coordinates of the bounding space as a function of the orientation of the eyes of the user wearing the AR glasses. A plurality of methods and respective sensors for determining the orientation of the eyes of the user (the "gaze") is known and can be used in embodiments of the invention. For example, an overview on existing eye tracking systems is given in Al-Rahayfeh A, Faezipour M. Eye Tracking and Head Movement Detection: A State-of-Art Survey. IEEE J Transl Eng Health Med. 2013;1:2100212. Published 2013 Nov 6. doi:10.1109/JTEHM.2013.2289879.

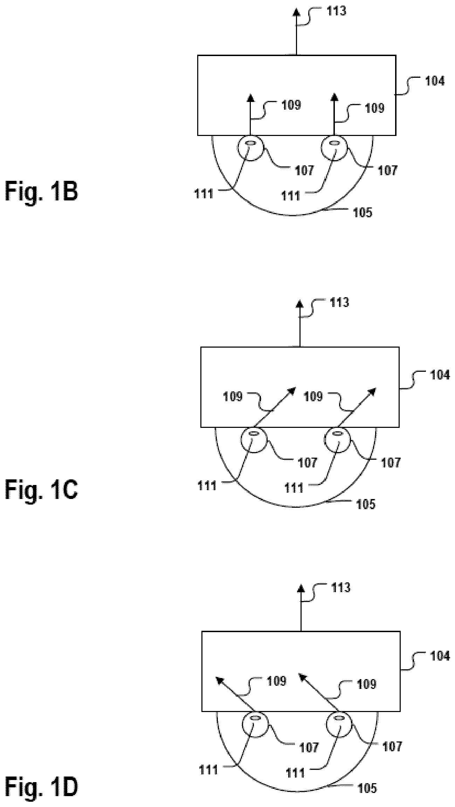

Figs. 1B-1H illustrate a top-down view of the AR glasses 104 being worn on a head 105 of a user. The user is looking through the AR glasses with user eyes 107. The orientation of the eyes, i.e., the direction in which the user is looking, or in other words, the direction of the user's gaze, is defined by an eye orientation direction 109 that is normal to a pupil 111 of the eyes. The AR glasses have an orientation direction 113, defined by the orientation of the user's head 105. The present application uses the terms "line-of-sight of the user" and "direction of view" interchangeably. The direction of view may be determined e.g. by detecting the "orientation" of the AR glasses and/or by detecting the orientation of the eyes, e.g. by means of an eye-tracking technique.

For example, in embodiments wherein the AR glasses do not comprise sensors for detecting the orientation of the user's eyes, the orientation of the AR glasses may be used as indicator and/or predictor of the view direction of the user. According to other embodiments, the AR glasses or other components of the automation system external to the AR glasses may comprise one or more sensors, e.g., cameras, for detecting the orientation of the user's eyes. In this case, the orientation of the user's eyes as detected by these sensors are transmitted to the executable program logic and are used for determining the coordinates of the bounding space.

Fig. 1B illustrates the orientation 113 of the AR glasses pointing in the same direction as the eye orientation 109 of the user wearing the AR glasses. Figs. 1C and 1D illustrate the orientation 113 of the AR glasses and the eye orientation 109 of the user wearing the AR glasses pointing in different directions. For example, Fig. 1C illustrates the orientation 113 of the AR glasses to be directed straight ahead while the user is gazing to the right (i.e., through the right portion of the glasses) and Fig. 1D illustrates the orientation 113 of the AR glasses to be directed straight ahead while the user is gazing to the left (i.e., through the left portion of the glasses).

In one embodiment, the positioning system 108 includes an optical sensor system including cameras or other optical devices, such as lasers, that measure the position of the pupil in the eye to determine the eye orientation (also referred to as eye orientation direction) of the user wearing the AR glasses. As discussed above, the orientation of the AR glasses worn by the user is not necessarily the same as the eye orientation of the user, and the coordinates of the bounding space depends in some embodiments not only upon the spatial position of the user wearing the AR glasses, but upon the orientation of the AR glasses (i.e.., orientation of the head of the user) and/or the eye orientation of the user (i.e., the direction in which the user is looking through the glasses).

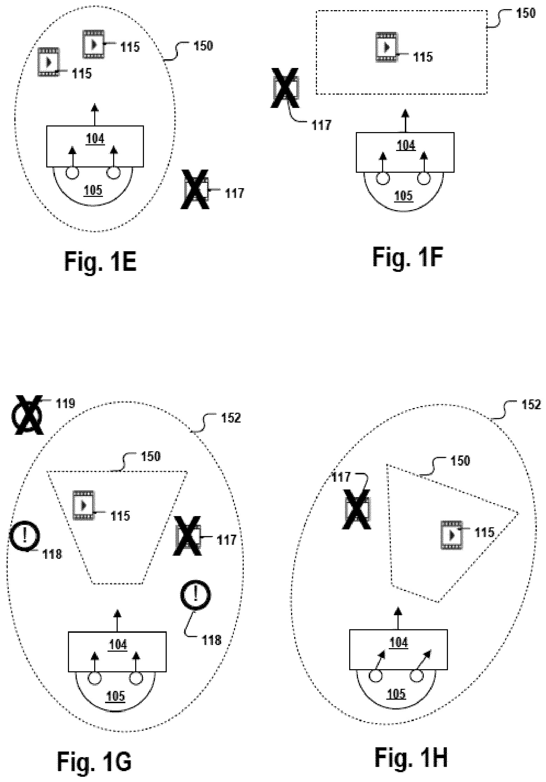

Fig. 1E illustrates a bounding space surrounding the user wearing the AR glasses 104 according to one embodiment. The bounding space 150 can be a 3D space and the cross-section of the bounding space surface is illustrated as dotted line. Depending on the embodiment, the bounding shape may have different forms, e.g., an sphere, a hemisphere, a polygon-based 3D body, a cube, a cuboid, etc. The executable program logic 106 is configured to display virtual objects to the user via the AR glasses 104 only if the virtual objects are located within the bounding space 150. For example, virtual objects 115 located within the bounding space 150 are displayed, the virtual object 117 is not displayed via the AR glasses. Only in case the user approaches the location of the virtual object 117 of the augmented reality coordinate system (or this object approaches the user) such that the virtual object 117 is within the bounding space 116, the object 117 is displayed. The bounding space may be dynamically updated as a function of the current position of the user wearing the glasses such that the user is always at a predefined position within the bounding space, e.g. at the centre, at a point within a part of the bounding space facing towards the back side of the user or another position.

Fig. 1F illustrates a bounding space in proximity to but not surrounding the user wearing the AR glasses according to another embodiment. In the depicted embodiment, the bounding space has a cuboid form. In other respects, the bounding space may have the properties as described e.g., for the embodiment depicted in Figure 1E.

Fig. 1G illustrate two different bounding spaces for two different types of virtual objects. For example, the bounding space 150 may have a smaller volume than the bounding space 152. The bounding space 150 can be completely comprised in or can overlap with the bounding space 152 and may have the same or a different form. In the depicted example, the bounding space 152 is a body with a trapezoid as its base while the bounding space 150 is a spheroid. In the depicted example, the executable program logic uses bounding space 150 for determining whether or not virtual objects of the type "video" are displayed via the AR glasses or not: if a virtual object of the type "video" is positioned within the bounding space 150, as the case with object 115, it is displayed. Otherwise, as the case with object 117, it is not displayed. The executable program logic uses bounding space 152 for determining whether or not virtual objects of the type "alarm message" are displayed (or emitted via an acoustic output interface in case of acoustic alarms) via the AR glasses or not: the alarm messages 118 are displayed and/or output via the AR glasses because they lie within the alarm-type bounding space 152. The alarm 119 is not displayed/output, because it lies outside of the bounding space 152.

This may be advantageous as a human user is typically not able to watch multiple videos in parallel. By, for example, only displaying instructional videos on how to operate specific machines that are in close proximity to the user, the user is prevented from becoming distracted and making mistakes while operating the machines. It also reduces the amount of data that needs to be transmitted to the AR glasses and avoids the need for computing power to render and display multiple videos. In contrast, the display of alarm messages within a much larger space has the advantage that important status messages, which may be essential for the manufacturing process, are communicated to the user even if he is not in the immediate vicinity of the machine. In some embodiments, the bounding space for alarm messages is so large that the user can even be in another room or on another floor. An alarm message can usually be processed quickly by the user and places only a small load on the bandwidth and computing capacity of the AR system. The use of different bounding spaces for different types of virtual objects (e.g. videos, texts, alarm messages, etc.) can therefore significantly improve the safety and efficiency of monitoring the manufacturing process or the maintenance of the associated machines.

According to embodiments, the size of a virtual-object-specific bounding space is chosen such that it is ensured that a virtual object displayed within this bounding space can be perceived and interpreted by the human visual system: at the edge of the field of vision, the eyes have only a low visual acuity. The display of complex, finely structured virtual objects, e.g. objects with a lot of text, at the edge of the field of view therefore brings little benefit to the user, may even distract the user and costs CPU resources. By generating and using virtual-object-type adapted bounding spaces by the executable program logic for deciding if a given virtual object should be displayed or not, operating errors are avoided.

Fig. 1H illustrate a bounding space whose position and/or orientation is adapted dynamically to the gaze of the user wearing the AR glasses. In the depicted embodiment, the AR glasses comprise sensors for detecting the gaze of the user independently of the orientation of the orientation of the AR glasses. In this case, the position and/or orientation of the bounding space (or multiple bounding spaces, if applicable) may be updated dynamically such that it follows and reflects changes to the direction of the user's gaze. For example, the update may comprise repositioning the bounding space such that it's centre is always on a point on the user's line of sight (here: gaze). So before the user moves his eyes to the right, as depicted in Figure 1G, the virtual object 115 is shown, but not 117. After the user has moved his or her eyes to the right, as depicted in Figure 1H, the virtual object 115 is shown, but not 117.

According to other embodiments, the position and/or orientation of the bounding space (or multiple bounding spaces, if applicable) is updated dynamically such that it follows and reflects changes to the orientation of the AR glasses worn by the user and/or changes to the gaze (orientation of eyes) of the user.

According to yet another embodiment, the database system 102 is a graph database system, a spatial database system and/or a streaming database system. The database system 102 also includes a database 110.

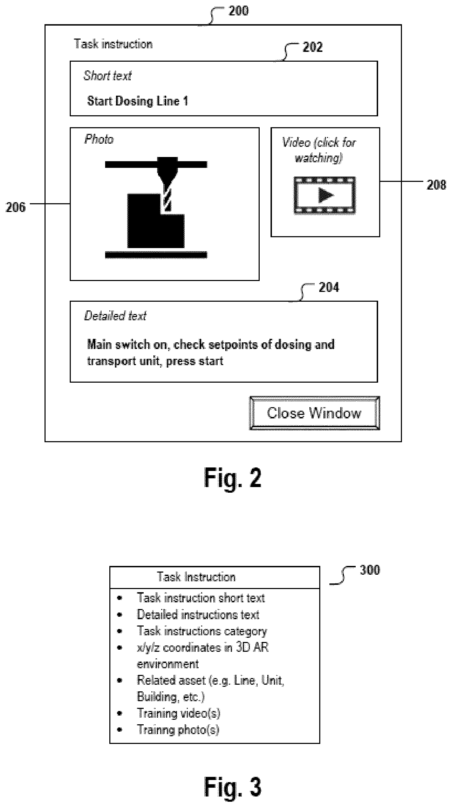

In one embodiment, the database system 102 is a spatial database system and the database 110 is a spatial database configured to store respective data based on spatial coordinates associated with the respective data, and in which the respective data is searched for and retrieved based on the spatial coordinates associated with the respective data. For example, the spatial database system 102 of the present invention stores a plurality of spatial coordinates, where each spatial coordinate includes corresponding data that relates to the object in the plant located at that spatial coordinate. For example, given a particular equipment of the plant, e.g., a pump, the spatial database stores one or more spatial coordinates of the pump, an optional description of each spatial coordinate (e.g., spatial coordinates 1-4 represent the four corners of the pump on the floor of the plant, spatial coordinate 5 represents a high point of the pump, etc.), and data associated with the pump, e.g., a task instruction for the pump. By way of an exemplary embodiment, the task instruction (for the pump) may include, but is not limited to: one or more of training videos, one or more photos and/or training photos, a related asset (e.g., other equipment or plant objects that may house the pump or operate in conjunction with the pump, such as equipment providing raw materials to the pump or accepting the product or outflow of the pump), a short task instruction text, a detailed task instruction text, and a listing of categories of task instructions. Task instructions will be discussed further below in conjunction with Fig. 2. In particular, the database system 102 can be a graph database system which supports fast geometric operations, i.e. a spatial graph database, which supports a fast drill-down analysis of equipment-related data, including a fast determination of distances to other objects and/or the user.

In one embodiment, the executable program logic 106 is configured to perform a query of the spatial database 110, based upon the up-to-date spatial position, for retrieving from the spatial database 110 the data of equipment that are in the proximity of the up-to-date spatial position of the user. The query can be, for example, a conventional SQL query repeated multiple times using the current position of the user as argument or can be a subscription to a streaming service which is updated once the user changes his or her position. In one embodiment, proximity of location is defined by a user-adjustable proximity parameter of the executable program logic 106. A user may set the proximity parameter to be any radius as measured from the spatial position of the user, or any radius the defines a hemisphere with a flat surface of the hemisphere positioned on a floor of the plant and centered on the up-to-date spatial position of the user.

In another embodiment, the executable program logic 106 is configured to perform a query of the spatial database 110, based upon the up-to-date spatial position of the use and on a field-of-view of the user through the AR glasses, for retrieving from the spatial database 110 the data of equipment that are located in the proximity of the up-to-date spatial position and within the field of view of the user of the AR glasses. For example, proximity of location is defined by a user-adjustable proximity parameter of the executable program logic 106. A user may set the proximity parameter to be any radius as measured from the up-to-date spatial position of the user, or any radius the defines a hemisphere with a flat surface of the hemisphere positioned on a floor of the plant and centered on the spatial position of the user. In response to the query, the executable program logic 106 receives the data of equipment that are located within a 3D cone defined by the current field of view of the AR glasses and having a length defined by the user-defined radius.

In one embodiment, the data of equipment that are located in the proximity of the up-to-date spatial position of the user and optionally within the field of view of the user of the AR glasses is received by the executable program logic, even if such data is blocked from view of the user of the AR glasses by obstacles in the plant. Thus, if a second equipment is partly or fully hidden behind a first equipment, the executable program logic 106 is configured to control the augmented reality glasses 104 for display of data associated with the second equipment (i.e., second object) by placing the data associated with the second equipment within the vicinity of the second equipment such that is not obstructed from view by the first equipment. In one embodiment, the data associated with the second equipment is displayed with a smaller font and/or smaller images and/or a pointer that points in the direction of the hidden or partly hidden second equipment to indicate that the data is associated with equipment that is at least partly hidden from view of the user of the AR glasses 104.

In another embodiment, the spatial database 110 of the spatial database system 102 is accessible via a subscription-based streaming service. The executable program logic 106 is configured to receive, via the streaming service and from the spatial database 110, the data of equipment that are located in the proximity of the up-to-date spatial position of the user of the AR glasses. That is, in contrast to retrieving from the spatial database 110 the data of equipment that are located in the proximity of the up-to-date spatial position of the user via a query of the spatial database 110, as discussed above, the executable program logic 106 and the spatial database 110, according to this embodiment, are configured so that the executable program logic 106 receives, via the services of any commercially available third party streaming service, the data of equipment that are located in the proximity of the up-to-date spatial position of the user based upon the up-to-date spatial position of the user being communicated to the streaming service provider. The spatial database system 102, including the spatial database 110, which is accessible via any subscription-based streaming service, may also be referred to as streaming spatial database system.

According to some embodiments, the database system 102 is a graph database system and the database 110 is a graph database which supports fast geometric operations. The database system hence can be regarded as a combined graph database and spatial database. The graph database is configured such that the nodes represent objects of the physical world, in particular equipment and equipment components or sub-components, and that the edges represent the real-world spatial and organizational relationships of these equipment, components and sub-components. Equipment- and component-associated data such as manuals or GUIs for setting process parameters or position information of said equipment or components may be stored, searched, and retrieved based on spatial coordinates associated with the respective data, and the executable program logic 106 is configured to perform a query of the graph database, based upon an up-to-date spatial position and optionally a field of view of the AR glasses 104, for retrieving from the graph database the data of equipment that are located in the proximity of the up-to-date spatial position of the user and optionally within a field of view (e.g.,, within a field-of-view 3D cone) as defined with reference to a 3D cone having a vertex based at the AR glasses a longitudinal axis of symmetry pointing in the direction of view of the user of the AR glasses.

According to some embodiments, the graph database 110 of the graph database system 102 is accessible via a subscription-based streaming service, as discussed above in conjunction with the spatial database. In this embodiment, the executable program logic 106 is configured to receive, via the streaming service and from the graph database 110, the data of equipment that are located in the proximity of the up-to-date spatial position of the user of the AR glasses 104. The graph database system 102, including the graph database 110, which is accessible via any subscription-based streaming service, may also be referred to as streaming graph database system.

The graph database (and the streaming graph database) can be configured such that objects of the plant are stored as interconnected nodes of a graph, where each node includes one or more spatial coordinates of the object in the plant and data corresponding to the object. Given the architecture of the graph database, the graph database (and the streaming graph database) of the present invention enables fast search and access to data associated with a given object in the plant along the topology of the graph, thereby evaluating the spatial coordinates of the user of the AR glasses in the plant.

In one embodiment, an object in the plant includes, but is not limited to, one or more sensors, of which sensors 112, 114 and 116 are exemplary embodiments, one or more actuators, of which actuators 118 and 120 are exemplary embodiments, at least one equipment 122, 124, e.g., a machine (e.g. a robot or stationary manufacturing machine), a machine component or subcomponent, a tool or a, and/or and raw material 126 and 128. In some embodiments, one or more actuators and/or sensors, such as actuators 118, 120 and sensors 114, 116, are connected to plant equipment 122 124 for actuating the equipment and/or components of the equipment for sensing parameters associated with the equipment and/or raw materials 126, 128 being processed by the equipment. Parameters that may be sensed include, but are not limited to, pressure, temperature, humidity and parameters associated with movement of equipment (e.g. a machine such as a stationary machine or a robot) or components of equipment, or raw materials being processed or to be processed by the equipment (e.g., conveyor speeds, speed of fluid flow in pipes, rotational speeds of mixers, movement of automated components, etc.). The scope of the present invention also includes sensors, such as sensor 112 not connected to any plant equipment, for measuring ambient plant conditions, such as temperature inside the plant, ambient lighting or particulate concentration in the air, for example. The scope of the present invention also includes objects in the plant, such as equipment 122 and robot 124, that are not connected to any sensors or actuators. Plant equipment may also include inert (i.e., passive) structural components of the plant (i.e., plant components, such as trellises, walls, ceilings, heaters, air conditioners and supporting structures, for example, that are not engaged in the processing of raw or intermediate materials).

In another embodiment, the database system 102 optionally includes isolated, virtual user spaces, so called "containers" 130. The containers may be implemented, for example, as docker containers. Each container 130 is associated with a respective node and is configured to continuously determine the current spatial information associated with the object of the respective node (e.g. the object's position and/or orientation) and to update the position information of this object in the database 110 immediately. For example, each container may comprise a software function which is interoperable with the positioning system 108 and is configured to receive current position information of the respective object continuously. In addition, or alternatively, one or more of the containers may comprise a software function which is interoperable with one or more position determination sensors attached to the object represented by the node associated with said container and may receive position information directly from the position determination sensors.

According to preferred embodiments, the database 110 or another data storage repository comprises a configuration of the plant which specifies the type and position of a plurality of physical objects constituting the plant, e.g. the equipment, equipment parts and optionally also raw materials and/or products. The containers 130 in combination with the position sensors and/or the position determination system 108 advantageously enable the fully automated updating of the configuration of the plant in response to any movement and/or rearrangement of objects in the plant. For example, robots may move about the plant and components of automated systems may also move to different positions as part of their operation. As the containers are isolated from each other, each container is "a standardized unit of software" and includes all its libraries and dependencies required by all software programs running in the container, including the automated position-determination and position information updating functions related to a respective object of the plant, so that the software within the container can reliably be executed regardless of architecture of the database system and regardless of the status of other containers and respective objects.

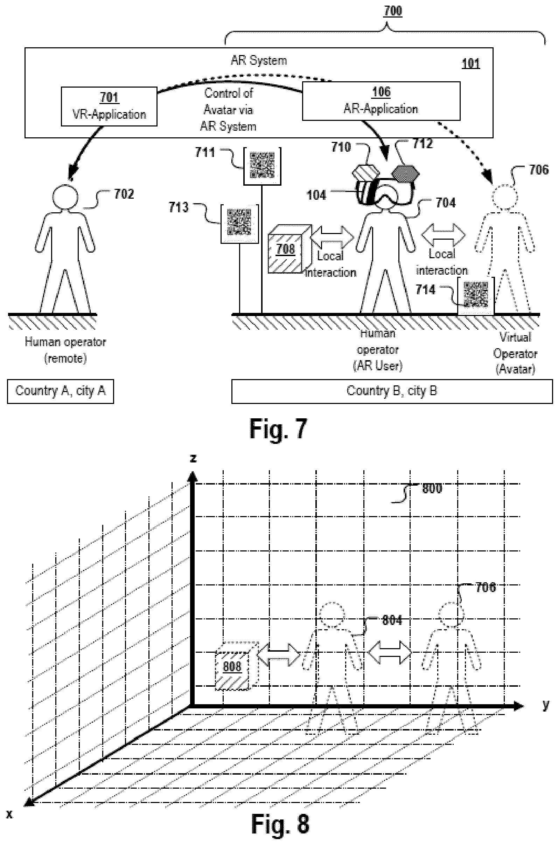

According to some embodiments, e.g. the embodiment depicted in Figure 1A, the at least one equipment comprises one or more robots. One or more of the robots can be configured to perform one or more tasks in a manufacturing process, e.g. transporting raw materials to a machine or cutting or gluing material. In addition, or alternatively, one or more of the robots can be configured to move and act as a physical representative of a remote user, e.g. of a human operator 702 depicted in Figure 7. The robot can comprise an interface for receiving control commands from a robot-external robot-control module, whereby the control commands determine the position, orientation, movement or tasks executed by the robot. According to some examples, the control commands are adapted to control the movement, position and/or orientation of the robot such that the movement, position and/or orientation of robot corresponds to and reflects the movement, position and/or orientation of an avatar of the remote user within the coordinate system associated with the augmented reality glasses.

According to some examples, a robot representing a remote user and acting as a physical representation of the remote user comprises one or more sensors such as cameras and microphones which are configured to capturing sensor data (e.g. images, videos, captured audio signals) and submit the sensor data to a virtual reality application 701 (see Figure 7) to enable the virtual reality application to generate a virtual reality as a function of the sensor data such that the remote user sees the images captured by the camera of the robot and hears the acoustic signals captured by the robot's microphone in real-time. According to preferred embodiments, the virtual reality application 701 and the robot-control module are configured to interoperate such that a bidirectional real-time synchronization between the virtual reality presented to the remote user and the physical environment of the robot is accomplished: a movement of the remote user (or at least the remote user's head triggers a corresponding movement of the robot, and the optic and acoustic signals acquire by the robot's sensors are provided to the VR application and used by the VR application for creating and displaying and/or acoustically outputting a virtual world to the remote user, whereby at least a part of the virtual world reflects the acquired acoustic and optic signals.

According to some examples, the robot comprises a first interface for receiving control commands from a robot-control module of the control system 132 and for sending sensor data to the control system 132. This may have the advantage that the control system 132 which may be configured for orchestrating multiple equipment during a manufacturing process may use and control the robot for performing specific tasks of the manufacturing process.

According to some examples, the robot comprises a second interface for receiving control commands from the AR-system 101, e.g. from an AR application 106 and/or from a VR application 701 comprised in the AR system (as depicted e.g. in Fig. 7). For example, the AR-system 101 may also comprise a robot-control module configured to receive sensor data from the robot and/or to send control commands to the robot for controlling the movement, orientation, position of the robot and/or the task to be execute by the robot. The current position and orientation of the robot is continuously reported to and stored in the database 110. If the robot changes position and the updated coordinates of the robot are stored in the database, this event may trigger the displaying or hiding of a virtual object in the AR glasses of a local user. This may have the advantage that the robot is seamlessly integrated via the first interface into the manufacturing process orchestrated by the control system, and is also integrated in the world of virtual objects crated by an AR application or a VR application. In some examples, the robot may comprise a conflict resolution module for resolving conflicts which may be caused by incompatible control commands received via the first and the second interface. For example, the conflict resolution module may resolve conflicts by overriding or ignoring conflicting commands provided by the VR application of a remote user, and rather executing the conflicting control commands received via the first interface.

The database system 102 is also considered to store position information and other data being descriptive of the physical objects of the plant such that the data in the database system represents a digital twin, in the sense that the database system 102 is configured to compute or allows computation by the executable program logic 106 a complete replica of the plant and its components. The virtual replica of the plant may include all plant objects, or alternatively those plant objects that have an impact on the production process and may include the one or more real-world spatial coordinates associated with each plant object, as well as the data corresponding to each plant object.

According to another embodiment, the spatial information associated with the object of the respective node includes one or more spatial coordinates of the object. For example, in further embodiments, the one or more spatial coordinates correspond to one or more points on a bounding surface of the object and/or inside the bounding surface of the object. The bounding surface of an object is defined to be an outside surface of a wrapper object comprising the object. A spatial coordinate inside the bounding surface may be, for example, the center of mass of the object or a geometrical center of the object. The wrapper object may be a rectangular 3D box or cube or a sphere.

In another embodiment of the invention, the data stored in a database system includes one or more task instructions associated with the respective equipment.

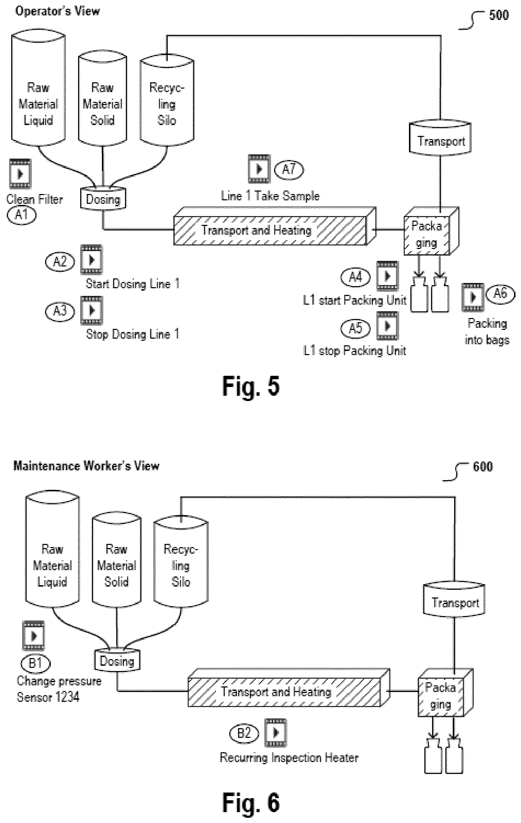

Fig. 2 illustrates an exemplary task instruction 200 (i.e., an exemplary AR object, as viewed by the user through the AR glasses), according to an embodiment of the invention. The task instruction AR object 200 represents the task instruction "Start Dosing Line 1" (A2) which is part of an operator's view through the AR glasses depicted in Figure 5.

The task instruction, as visualized (i.e., displayed) by the AR glasses and superimposed on a view of the plant as seen by a user through the AR glasses, includes, but is not limited to, one or more of a short text 202, a detailed text 204, a photo 206, and/or a video icon 208. In one embodiment, the program logic 106 relates the spatial coordinate (defined with respect to a real-world coordinate system) stored in the database and linked to (i.e., the corresponds to) the task instruction of the respective equipment, to a spatial coordinate system used by the AR glasses for displaying virtual objects (in the following "AR glasses coordinate system"), and anchors the task instruction to the spatial coordinate defined with respect to said coordinate system. In one embodiment, the AR glasses coordinate system to which the task instruction is anchored is an anchor point of the mesh network that covers (i.e., defines) the respective equipment, and the program logic 106 continuously updates the coordinates of the virtual objects within the AR glasses coordinate system such that the display of the task instruction does not move when the user of the AR glasses moves or changes a direction of view.

In further embodiments, the contents of the task instruction contain texts, photos and videos that provide information about the respective equipment, such as operation parameters, including, for example, maximum and minimum values of operational parameters, maintenance requirements and/or history, raw materials used and product produced, photos of the respective equipment to which the task instruction corresponds, etc. In one embodiment, if the task instruction includes a video icon, the user may start the video by pointing a finger or an object such as a pointer to the display of the video icon as seen through the AR glasses, and the program logic 106, in response to detecting the pointer or finger, executes (i.e., starts) the video. In one embodiment, the pointer or finger is partly covered with a material that reflects a particular wavelength, such as a narrow-band wavelength, and the program logic is configured to initiate execution of the video upon reception of this wavelength for a minimum amount of time. For example, if a pointer is positioned at the video icon for at least 3 seconds, the video is executed by the program logic 106.

In a further embodiment, the equipment includes machines (e.g., machines that process raw materials or intermediate products, such as pumps, mixers, material conveyors (i.e., conveyor belts, pipes, etc.), ovens, automated systems or components of automated systems, robots and/or robotic systems, spectrometers, chromatographers, etc.), as well as passive plant equipment, such as floors, wall, ceilings, housing units, trellises, stands, etc.

Referring back to Fig. 1A, the automation system further includes a distributed control system 132 coupled to the database system 102. The distributed control system (DCS) 132 is further coupled to the sensors 112, 114, 116, actuators 118, 120, equipment 122, and robot 124, and is configured for controlling operation of the sensors 112, 114, 116, actuators 118, 120, equipment 122 and/or robot 124 and/or receiving information from the sensors 112, 114, 116. In one embodiment, the DCS 132 includes a memory 134 configured to store one or more process parameters corresponding to the equipment 122 and/or robot 124 and process control software 136, and a processor 138 configured to execute the process control software 136 for automatically controlling the production process in the plant. For example, the processor 138 may be configured to execute the process control software for automatically controlling the production process based on measurement signals received from one or more sensors 112, 114, 116 and control signals sent to one or more actuators 118, 120.

The process parameters indicate the current state of the production process of the plant, such as operational parameters of the equipment, including status of the equipment (e.g., indication of faults) and values for various equipment parameters, such as flow rates, pressure, temperature, etc.

The sensors are configured to measure the one or more process parameters of the equipment or parameters of the plant itself, such as ambient environmental parameters, and the actuators are coupled to one or more equipment 122 and/or robots 124 for controlling process parameters of the equipment and/or robots.

In another embodiment, the automation system further includes a user database 140 coupled to the DCS 132. The user database 140 is configured to store user information associated with the production process. For example, in one embodiment, the user information includes user IDs, user roles and/or user privileges. In one embodiment, the program logic 106 controls the content of the AR visualization (i.e., which task instructions to display for a particular user, if any, and/or what content of each task instruction to display for the particular user) for display in the AR glasses for a particular user of the AR glasses based not only upon the spatial location of the user, but also upon user information (corresponding to the particular user) received from the user database 140 by the program logic 106. That is, the program logic 106 "filters" the received task instructions and/or content of the task instructions based upon the user of the glasses, as indicated by the user information received from the user database 140.

Thus, in one embodiment of the invention, the executable program logic 106 is configured to receive user credentials, via, for example, a user interface (not shown) of the AR glasses, or alternatively via a smart phone, other portable devices, or via a scanning device that scans personal characteristics of the potential user, such as images of the retina or fingers. The user credentials may be entered by the user into the automation system via a wireless or wired connections, using, e.g., a keyboard or voice commands, or the user credentials may be received by the automation system via a scanning device. After receipt of the user credentials, the program logic 106 authenticates the user based upon matching the received user credentials with, for example, a user ID of the user IDs.

Figure 3 illustrates an exemplary node 300 of a graph database, the node representing a task instruction which can be graphically represented as AR object as depicted in Figure 2.

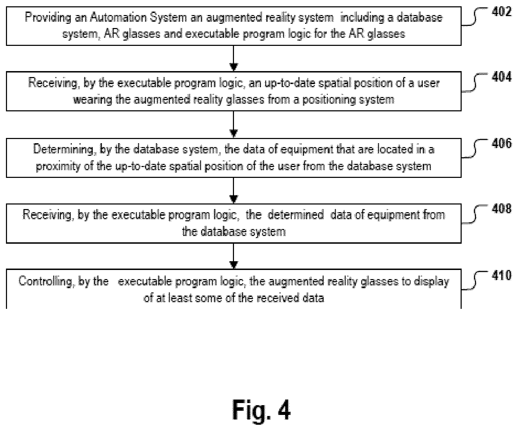

Figure 4 illustrates a flow chart of a method for operating an automation system. For example, the method can be performed based on the automation system depicted in Figure 1A. The method comprises a step 402 of providing the automation system. The automation system comprises an augmented reality system including a database system 102 having stored data and spatial coordinates associated with respective equipment of the plurality of equipment, augmented reality glasses 104 configured to display the data, and executable program logic 106 operatively coupled to the augmented reality glasses as described for example with reference to Figure 1A. The augmented reality system may comprise further component, e.g., the control system 132 and/or one or more of the equipment.

Next in step 404, the executable program logic 106 receives an up-to-date spatial position of a user wearing the AR glasses from the positioning system 108. The position information may be received via a network 107 as depicted in Figure 1A. In other embodiments, the program logic 106 and the positioning system 108 may be integral components of the AR glasses and the position information of the user may be received via a local interface, e.g., a bus.

Next in step 406, the database system determines the data of the one(s) of the equipment which are proximate to the up-to-date spatial position of the user wearing the glasses. For example, the determination can be performed automatically or in response to a request of the program logic 106.

Next in step 408, the program logic 106 receives the determined data of equipment from the database system. For example, this can be performed in response to a submission of a request to the database system or based on a subscription of the program logic 106 to a messaging service offered by a streaming interface of the database system 102. The submitted request and/or the subscription comprise the up-to-date position information of the user wearing the glasses, thereby enabling the database system in step 406 to identify the ones of the equipment being in sufficient spatial proximity to the user wearing the AR glasses.

Next in step 410 the executable program logic 106 causes the AR glasses to display of at least some of the received data, e.g. a GUI with instructions for operating or maintaining the equipment. The displayed data may enable the user to control and/or maintain the equipment and hence also the automated production process.

Figure 5 illustrates an exemplary GUI displayed to a user having assigned an "operator" role. For example, the operator may wear the AR glasses and look at the real equipment. The task instructions A1-A6 are shown by the AR glasses at related x/y/z coordinates. For example, the AR glasses may use the xy coordinates of the different equipment like the dosing unit, the transport and heating unit or the packaging unit for displaying the respective instruction manuals or videos at a predefined distance relative to the real-world positions of the real-world equipment.

For example, the user wearing the glasses may have a registered user account in the user database and his or her user ID is associated with one or more user roles, in this case, the "operator" role. In addition, or alternatively, each user role may optionally include one or more user privileges.

Thus, the executable program logic 106 is configured to select content of the received data (e.g., "filter" content of the received task instructions) to be displayed based upon the one or more user roles and/or the one or more user privileges associated with the user ID. For example, the one or more user roles includes, by way of non-limiting exemplary embodiments only, an operator role, a maintenance role, an engineering role, an administrative role, a guest role. The one or more user privileges and/or roles limits and determines what may be displayed in the AR world through the AR glasses. For example, a user privilege for an engineering role may define which equipment in the plant the user associated with the user ID having the role of engineer is accessible to the user, in the sense of viewing data that corresponds to the equipment through display of the respective task instructions. A user associated with a user ID may have more than one role and more than one user privilege.

In the example depicted in Figure 5, the user wearing the AR glasses has assigned the "operator" role. As a consequence, the executable program logic causes the AR glasses to display the view 500 where the user sees an instruction manual A1 on how to clean a filter when approaching the dosing unit and may further see additional task instructions and respective instruction videos A2, A3. When the user approaches the transport and heating unit, he or she will see the task instructions A7 via the AR glasses. Likewise, he or she will see task instructions A4-A6 when approaching the packaging equipment. The tasks A1-A7 relate to standard tasks which have to be performed in normal operation mode of the industrial plant.

Figure 6 illustrates an exemplary GUI 600 displayed via the AR glasses to a user having assigned the role "maintenance worker". When the maintenance worker wears AR glasses and looks at the real equipment, he or she will see task instructions related to maintenance rather than operational tasks. For example, the user will see task instructions B1 for changing a defect pressure sensor 1234 when approaching the dosing unit and/or will see instructions B2 on how to inspect the heater when approaching the transport and heating unit.

Fig. 7 illustrates the use of spatial anchors and shows an avatar of a remote user.

A remote human operator 702 may be an expert for maintaining an equipment, e.g., a complex machine 708. The machine and a local operator 704 are both located at an industrial plant in city B in country B. The remote user 702 is located in a different place, e.g., in city A in country A. The augmented reality system 101 comprises the executable instructions in the form of an augmented reality application (AR application). In addition, the AR system 101 comprises a virtual reality application 701 ("VR-application"). The VR-application is interoperable with the AR-application. The AR system 101 enables the remote user to support the local colleagues 704 in various operational and/or maintenance tasks to be executed locally with or at the equipment 708. The AR system is configured to create an avatar 706 for the remote user and position the avatar at a defined position, e.g. at a position proximate to the machine 708 where his support is needed.

According to preferred embodiments, the AR system comprises a VR application configured to generate a virtual reality for the remote user which enables the remote user to see the local user 704 and/or other real-world objects at the industrial plant, e.g. machine 708, as would be perceived from the perspective of the avatar 706. For example, the remote user can see the live values of the production line and the machine through a robot equipped with a camera and/or further sensors positioned at the same position and orientation as his avatar 706. In some embodiments, the robot is remotely controlled by the remote user 702 and enables the remote user to perform defined operations by the robot. The avatar has a defined position in the 3D environment generated by the AR application 106 and displayed via the AR glasses 104 to the local user 704. Also, the local human user 704 (AR user) and the machine 708 have defined positions within the 3D environment used as the coordinate system of the augmented reality ("mixed reality"). The executable program logic 106 implemented e.g. as AR application program is operatively coupled to the AR glasses 104 and also to the VR application 701 of the remote user. The AR system 101 is configured to ensure that the VR coordinate system seen by the remote user and the AR coordinate system seen by the local user 704 via the AR glasses have the same coordinate system as a basis for positioning of virtual objects (avatars, holograms, GUIs, etc.). The AR application 106 as well as the VR application 701 receive position information of the virtual objects to be displayed in the augmented/virtual reality from the same database system 102. According to some embodiments, the VR application program generates a virtual reality ("manufacturing metaverse") within which an avatar of the local human operator 704 is shown in a defined optical representation (e.g., only a name, or even a 3D avatar shape), so that the remote user can see the local user within the VR app (not shown). Vice versa, the local user (AR user) 704 can see the avatar 706 of the remote user 702 as a hologram (e.g., only as a name or as a 3D avatar shape) within the "manufacturing metaverse" presented as augmented reality to the local user 704 via the AR glasses 104.

According to embodiments, the AR glasses 104 comprise a microphone 710 and an acoustic output interface 712, e.g., speakers providing a user interface to the local user. Likewise, the VR application 701 can comprise a user interface including a microphone and an acoustic output interface for enabling the remote user 702 to interact with the VR application. The AR application program 106 operatively coupled to the AR glasses of the local user interoperates with the VR application such that the remote user 702 and the local user 704 can talk to each other. Preferably, the AR application uses the positional information of the local user and of the avatar of the remote user in the shared coordinate system to control the volume of the acoustic output interface of the AR glasses: the closer the local user 704 to the avatar 706, the greater the volume. Likewise, the sensitivity of the microphone may be adapted as a function of the distance of the two users in the shared coordinate system: the larger the distance, the less sensitive the microphone.

The AR system according to the depicted embodiment comprising the AR application and the VR application hence allows the two users to collaborate using a shared coordinate system also referred to as "manufacturing metaverse". The manufacturing metaverse consists of a virtual coordinate system shared by all users and AR objects in the metaverse, whereby this virtual coordinate system is mapped to and presented as an overlay to real-world objects 708 of the industrial plant. This enables the experienced, remote user to experience the same or a similar visual context like the guided local user.

According to a first scenario, a thermoplastic urethane (TPU) production is taking place at location B. The production line was modified to adapt the line for a new product which was never produced by this production line before. The remote operator is an expert for this kind of production and lives a location A (city A, country A). The remote user will guide the local operators with regard to when valves should be checked and which ones. The remote user will also notify the local user of important things the local user should care of in order to ensure proper and smooth production. Furthermore, the remote user may guide the local user for proper operation steps in the right situation and at the right moment.

According to a second scenario, the TPU production is already taking place at location B. For the night shift time, the work coordinator for that night shift became ill. An experienced human operator at the remote location A (city A, country A, other time zone) can support during dayshift for the production of location B. He will use his avatar for direct collaboration with the one or more local human operators. The remote user can coordinate the work for local workers by creating processes/tasks which can be carried out by the local users (AR user).

According to a third scenario, an autonomous TPU production is taking place at location B. Under normal/standard conditions, the line can run completely autonomous. Manual operation is only needed in case something unforeseen happens. This supervision job will be done via manufacturing metaverse with the VR application from remote. One or more robots are coordinated and triggered by the remote human operator by creating/using the right processes/tasks for the robot(s). In case the remote human operator needs to see a real picture and/or video stream of the local situation, the remote user is enabled via the VR application and an AR application associated with a control program of a robot to move to the equipment of interest. The robot is equipped with a camera and is controlled to take the same position and direction as the position of the remote user's avatar. When the robot has reached this position, the camera of the robot is caused to take images and/or videos of the equipment in front of the avatar/robot and transfer the images or videos to the VR application. The remote user will see the images and/or videos via the virtual reality created by the VR application. As the robot is controlled to take the images and/or videos from the same position and orientation as the remote user's avatar in the mixed-reality coordinate system at the industrial plant, the photos and images will show the equipment of interest from the same perspective a local human operator would have at the said position and orientation.

Embodiments of the invention may be used for many other scenarios and industries. For example, embodiments of the invention may be used in the car manufacturing industry and allow experienced engineers to support colleagues working at other sites of the car manufacturing company.

Likewise, the AR system can be used in the healthcare business and allow a medical expert or doctor to support other doctors working at other hospitals.

In some use case scenarios, the robot is not only used for acquiring images or videos but can also be used for fixing a problem under the control of the remote user. For example, robots may be used for performing maintenance tasks at locations which are dangerous for human operators, e.g., in the context of deep-sea construction work, or in the context of tasks to be executed in an environment which is contaminated or at risk to be contaminated with radioactive substances or toxic chemicals.

According to some embodiments, spatial anchors are used for positioning virtual objects at a defined position and orientation relative to real world objects such as equipment 708. For example, it may be desirable to display a GUI-hologram enabling the user to monitor and control the equipment 708 at a distance of about 40 cm in front of the equipment.

In order to ensure that the local user 704 will see the GUI-hologram always at this defined position in the augmented reality irrespective of the current position of the user 704, the executable program logic 106 generates and display the GUI hologram at the spatial anchor or at a defined distance relative to the spatial anchor. According to some embodiments, the spatial anchors (i.e., at least an anchor-ID and anchor coordinates) are stored in the database system such that they are accessible to the VR-application 701. The VR application is configured to read the stored spatial anchors and to generate and display the same virtual object, e.g., the GUI hologram for equipment 708, at said spatial anchor or at aid defined distance relative to the spatial anchor.

According to some embodiment, spatial anchors are defined and created by placing machine-readable codes, e.g., QR codes 711, 713, 714 at various places within the industrial plant. The AR glasses 104 may comprise a camera which acquires digital images of the machine-readable codes, extracts an anchor-ID encoded therein, creates an anchor having the coordinates of the machine-readable code within the real-world coordinate system, and stores these anchors in the database system. Alternatively, the user 704 may create a spatial anchor by performing an anchor-creation gesture at a desired position in the real world. This gesture is captured by a camera of the AR glasses and a spatial anchor is created and stored by the executable program logic 106 analogously. The anchor-I D may be crated automatically upon the creation of the spatial anchor.

Fig. 8illustrates a coordinate system 800 used by the VR application 701 for generating virtual representations 808 of real-world equipment 708 of the industrial plant and displaying the virtual representations to a remote user 702 via a virtual reality display technique. The coordinate system 800 of this virtual reality may further comprise virtual representations 804, e.g., avatars, of local users 704 operating in spatial proximity to the real-world objects 704. The distances of the virtual representations 808, 804 of the equipment 708 and local users 704 within coordinate system 800 correspond to and reflect the real distances of the real-world objects can be represented via a spatial mesh overlaying the equipment of equipment 708 and local users 704 at the industrial plant in the real world. In addition, the remote user 702 may be represented in this coordinate system 800 as a virtual entity, e.g., an avatar 706 which can be seen by the local user 704 via the AR glasses 704. Figure 8 shows the coordinate system shared by the virtual reality generated by the VR application and the AR reality generated by the AR application, but preferably the remote user sees objects and avatars in the coordinate system 800 from the perspective (position and orientation) of his avatar 706 (not shown).

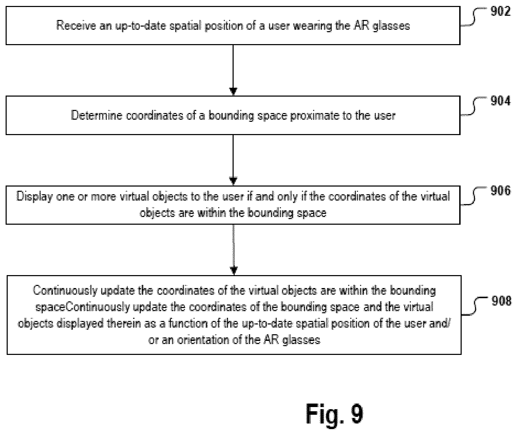

Fig. 9 illustrates a flow chart of a method for operating an automation system for controlling an automated production process of an industrial plant. For example, the method can be performed based on the automation system depicted in Figure 1A. The automation system comprises an augmented reality system that includes augmented reality glasses 104 configured to display the data, and executable program logic 106 operatively coupled to the augmented reality glasses, as described for example with reference to Figure 1A. The augmented reality system may also include a database system 102 having stored data and spatial coordinates associated with respective equipment of the plurality of equipment. The augmented reality system may also comprise further components, e.g., the control system 132 and/or one or more of the equipment.

In step 902, the executable program logic receives an up-to-date spatial position of a user wearing the augmented reality glasses from a positioning system 108. The position information may be received via a network 107 as depicted in Figure 1A. In other embodiments, the program logic 106 and the positioning system 108 may be integral components of the AR glasses and the position information of the user may be received via a local interface, e.g., a bus.

In step 904, the executable program logic determines coordinates of a bounding space proximate to the user wearing the AR-glasses. The executable program logic 106 is configured to determine the coordinates of the bounding space proximate to the user based upon one or more of the following bounding space parameters: the up-to-date spatial position of the user, the line of sight of the user, a number of equipment proximate to the user or in the line of sight of the user (e.g., a density of equipment proximity to the user and/or in the line of sight of the user), a number and/or data type of the virtual objects corresponding to the equipment in the proximity of the user and/or in the line of sight of the user, configuration of the walls, floors and/or ceiling of the plant infrastructure in the proximity of the user, and the one or more user roles assigned to a user wearing the AR glasses 104. The bounding space is thus defined by the coordinates that define a bounding surface of the bounding space, as determined by the program logic. The program logic may also be configured to interpolate between the determined coordinates to add more coordinates that define the bounding surface of the bounding space with more resolution.

In step 906, the executable program logic displays one or more virtual objects to the wearer of the AR glasses via the AR glasses if and only if coordinates of the virtual objects are within the bounding space. The displayed virtual objects comprise data associated with monitoring and/or controlling the automated production process. The displayed virtual objects include data, such as text, video, image, audio, or alarm data. For example, in one embodiment the program logic sends the up-to-date spatial position of the user wearing the AR glasses and the coordinates of the bounding space (e.g., the coordinates of the bounding surface the encloses the bounding space) to the database system 102, and receives, from the database system, those virtual objects having coordinates that are contained within the bounding space as defined by the coordinates of the bounding space. Thus, the user (e.g., the wearer) of the AR glasses views an overlay of the virtual objects contained within the bounding space with the real-world objects of the plant. The user can then use the text, image, video, audio and/or alarm data corresponding to the virtual objects displayed to maintain and/or control the respective equipment to which the virtual objects correspond, and/or to acquire operational status, parameter settings, and/or to educate oneself as to how the equipment operates and/or to the role of the different equipment in the production process.

In step 908, the executable program logic continuously updates the coordinates of the three-dimensional bounding space and the virtual objects displayed therein as a function of the up-to-date spatial position of the user wearing the AR glasses. In addition, the program logic may also be configured to receive data being indicative of the orientation of the AR glasses and/or of the orientation of the eyes and use this additional data for determining and updating the coordinates of the bounding space as a function of the said additional data. Thus, as the user wearing or operating the AR glasses moves to a different spatial position and/or as the user, although stationary with respect to a spatial position, changes a line-of-sight through the glasses by changing the orientation of the AR glasses (e.g., a user wearing the AR glasses as a head piece moves the head piece through a movement of the user's head), the program logic determines a new bounding space. The program logic 106 then displays one or more virtual objects to the wearer of the glasses via the AR glasses 104 if and only if the coordinates of the virtual objects are within the new bounding space. The virtual objects displayed in the new (i.e.., updated) bounding space may include some of the virtual objects displayed in the previous bounding space, dependent on any overlap between the new and previous bounding spaces.

According to yet another embodiment, and referring back to Fig. 1A, the augmented reality system includes the AR glasses 104 and the program logic 106, and the database system 102 is either a component of the distributed control system 132 or a self-contained object or component of the plant that is communicatively coupled to augmented reality system and/or the distributed control system 132. In this embodiment, the executable program logic 106, upon receiving a spatial position of the user wearing the AR glasses 104 from the positioning system 108, is configured to display, via the augmented reality glasses, one or more virtual objects associated with one or more equipment proximate to the spatial position of the user, where at least one of the virtual objects are linked to at least one respective secondary virtual object.

In one embodiment, the secondary virtual object is stored in the database system 102 or alternatively in a database external to the AR system 101. In one embodiment, the secondary virtual object is not presently displayed to the user via the augmented reality glasses. The database system 102 includes all of the features described in the embodiments disclosed heretofore. For example, the database system 102 is configured to store virtual objects representative of data, mappings (i.e., links) between one or more virtual objects and one or more secondary virtual objects, one or more virtual objects and respective equipment of the plurality of equipment and/or coordinates of the virtual objects and coordinates associated with the respective equipment of the plurality of equipment.

The executable program logic 106 is configured to receive, from the augmented reality glasses, a signal indicating a hands-free selection, by the user, of a virtual object linked to a respective secondary virtual object. For the purposes of the present disclosure, a "hands-free" selection of a virtual object viewed by the user via the AR glasses includes any manner of the user making the selection of the virtual object without the user's hands. That is, the user does not use his/her hands to select a virtual object, which is particularly advantageous, for example, when the user is performing maintenance on equipment or controlling equipment, or otherwise when the user's hands are occupied with performing various tasks or holding various things.

In one embodiment, the display of virtual objects to the user via the AR glasses that are linked to secondary virtual objects (also referred to as linked virtual objects or selectable virtual objects) are different than the display of virtual objects to the user via the AR glasses that are not linked to secondary virtual objects (also referred to as non-linked virtual objects). In one embodiment, linked virtual objects may be displayed with limited amounts of information, such as limited amounts of text data and/or image data, for example. Although according to some embodiments linked virtual objects are not "clickable" in the conventional sense of a user moving a cursor over highlighted text via physical motion of a user's fingers and/or hand, linked virtual objects are analogous to conventional "clickable" links in the sense that once selected, the user views additional information associated with the link (e.g., selection of a conventional clickable link directs the user's internet browser to a different web site address (i.e., a different URL) for display of additional information associated with the clickable link). According to embodiments, the display of linked virtual objects may be different from the display of non-linked virtual objects by size of the display of the linked virtual object, highlighting of text/images of the display of the linked virtual object, color of the display of the linked virtual object, a displayed number of the linked virtual object, and/or a color plus number combination of the display of the linked virtual object, for example.

In one embodiment, the database system 102 is additionally configured to store secondary virtual objects and mappings (i.e., links) between each secondary virtual object and a respective linked virtual object (i.e., a storing virtual objects and corresponding respective secondary virtual objects).

The executable program logic 106 is also configured to display, via the augmented reality glasses, the respective secondary virtual object linked to the virtual object that is selected hands-free by the user. In one embodiment, the signal received by the executable program logic 106 identifies the selected virtual object, via coordinates of the selected virtual object, for example. The executable program logic 106 then accesses the database system 102 to acquire the respective secondary virtual object associated with the selected virtual object. In one embodiment, the AR glasses 104 and/or the positioning system 108 are configured to generate the signal based upon the hands-free selection by the user of the virtual object, as discussed in more detail further below.

In addition, or alternatively to displaying, via the augmented reality glasses, the respective secondary virtual object linked to the virtual object that is selected hands-free by the user, the executable program logic 106 is configured to trigger an action associated with the selected virtual object. For example, a triggered action includes one or more actions, such as sending a command to the one of the equipment associated with the selected virtual object, where the command causes the equipment to start, stop or change its operation, activating a command interpreter for voice commands, whereby the command interpreter is configured to process and interpret voice commands for controlling the equipment associated with the selected virtual object in accordance with a list of commands specified in the selected virtual object and/or disabling at least one other command interpreter configured to process and interpret voice commands in accordance with a list of commands specified in a non-selected virtual object, such as a non-selected selectable virtual object.

For example, the voice detection unit may comprise different command interpreters for different equipment and respectively assigned virtual objects. The selection of one of the virtual objects may result in an activation of the command interpreter associated with the selected virtual object and/or the deactivation of other command interpreters. This may have the advantages that the production line can easily supplemented with further equipment and respective command interpreters without risking conflicts which may arise if e.g. the command "start" would activate tasks to be performed by multiple different equipment. In addition, this feature may allow keeping the voice command simple, because depending on the currently selected virtual object, the command "start" may trigger a start action only in the equipment represented by the selected virtual object.

According to one embodiment, the virtual objects represent data enabling the user to operate and/or maintain the plurality of equipment. Additionally, the secondary virtual objects linked to respective virtual objects represent data associated with the respective virtual objects. For example, in one embodiment, if a displayed virtual object identifies itself to the user (via for example, a particular colour, colour plus number, size and/or highlight (e.g., highlighted portions, highlighted text, highlighted image)) to be of a particular data type (e.g., text data, image data, video data, audio data, alarm data), then the respective secondary virtual object that is linked to the displayed virtual object represents data of the same type. By way of an exemplary, nonlimiting example, a virtual object may be displayed as geometric figure, such as a square, rectangle, ellipse or any polygon, or a GUI, for example, having a particular shape, text blocks and/or data entry fields.

After the dynamic assignment of a colour to a virtual object, the entire virtual object may be of the particular colour, or the particular colour may be displayed as a background colour or as a coloured border of the polygon or GUI, without the virtual object having any other any identifying features.

Thus, the secondary virtual object, which is linked to the respective virtual object, represents (e.g., contains) text data, such as user instructions, maintenance instructions, production information, operating status, and/or operating parameters associated with an equipment to which the respective virtual object corresponds. For example, the respective virtual object corresponds to an equipment when the respective virtual object is displayed to the user via the AR glasses in proximity to the equipment.

In one embodiment, the executable program logic is configured to determine a number of virtual objects linked to respective secondary virtual objects (i.e., linked virtual objects) that are associated with one or more equipment proximate to the spatial position of the user, dynamically assign, before the virtual objects are actually displayed to the user via the AR glasses, a distinct colour from a predefined colour set of colours to each virtual object linked to respective secondary virtual objects, and display each virtual object linked to respective secondary virtual objects with the dynamically assigned distinct colour. Furthermore, if the number of virtual objects linked to respective secondary virtual objects to be displayed to the user is greater than a number of colours of the predefined colour set, then the executable program logic is configured to display only those virtual objects linked to respective secondary virtual objects that are assigned distinct colours. By displaying only those linked virtual objects having distinct colours as selected from a predefined colour set of distinct colours, each coloured linked virtual object has a specifically unique characteristic, thereby enabling the user of the AR glasses to select more easily, via a hands-free operation, any particular coloured linked virtual object.

When the number of virtual objects linked to respective secondary virtual objects is greater than a number of colours of the predefined colour set, the executable program logic, according to another embodiment, is configured to select those virtual objects to which a unique colour is assigned by using a predefined priority ranking of the linked virtual objects, also referred to as the selectable virtual objects.

For example, and as discussed in further detail below, a predefined priority ranking of selectable virtual objects may be based on the data type of the virtual objects. That is, and only be way of a non-limiting exemplary example, a virtual object referencing alarm data may have a higher priority over a virtual object referencing image data which may have a higher priority over a virtual object referencing audio data which may have a higher priority over a virtual object referencing video data. Thus, if the predefined colour set has only three colours, such as red, blue and yellow, and if the field-of-view of the AR glasses contains equipment having seven associated selectable virtual objects, of which one represents alarm data, four represent image data, one represents audio data, and one represents video data, then the executable program logic displays the virtual object representing the alarm data in a first distinct colour selected from the three distinct colours of the predefined colour set, one of the four virtual objects representing the image data in a second different distinct colour selected from the three distinct colours of the predefined colour set, and the virtual object representing the audio data in a third distinct colour selected from the three distinct colours of the predefined colour set. The other three virtual objects representing the image data and the virtual object representing the video data will not be displayed. In another embodiment, if a colour is to be assigned to one selectable virtual object of a group of two or more selectable virtual objects referencing the same data type, the program logic randomly selects one virtual object from the group of two or more virtual objects, assigns a distinct colour to the selected virtual object, and displays only the selected virtual object having the assigned colour.

In another embodiment, a user may designate, upon pre-configuration of the AR system or initiation of a user session with the AR system, colour sets having two or more distinct colours, which the program logic may retrievably store in tables, for example, in local memory or in database system 102.

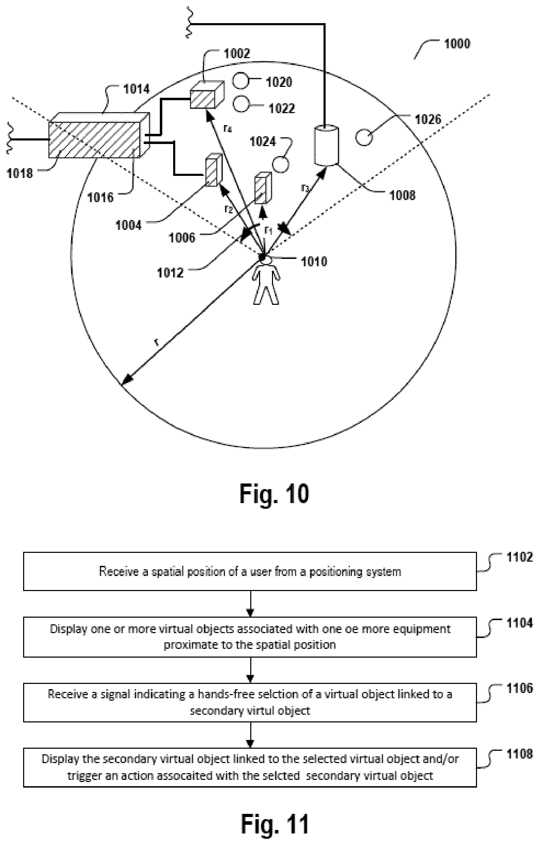

Fig. 10 illustrates a portion of a plant 1000 having equipment 1002, 1004, 1006 and 1008 located proximate to a user 1010 (e.g., an up-to-date spatial position of the user 1010). In one embodiment, equipment that are proximate to the spatial position of the user include equipment within the field of view of the user wearing the AR glasses, or within the field of view as limited by a user-defined or predefined maximum distance "r" from the user, or within a bounding space proximate to the user, or of equipment that are located in proximity to the spatial position of the user and other equipment not necessarily located in proximity to the user, but are included when the role of the user of the AR glasses enables the user to view virtual objects associated with equipment located in different rooms and/or on different floors of the plant. The field of view of a user wearing the AR glasses, the user-defined or predefined maximum distance from the user, the bounding space proximate to the user, and user role in filtering the equipment deemed to be located "in proximity to" the spatial position of the user has been previously discussed in the present application and is within the scope of the present embodiment of Fig. 10.

As illustrated by the Fig. 10 embodiment, equipment proximate to the user 1010 is equipment located within a field of view 1012 of the AR glasses (not shown) worn by the user 1010 and within a maximum radius r from the user. The scope of the present embodiment covers a radius r that defines a circle, a hemisphere, or a sphere about the user 1010, or a portion of sphere (e.g., a bounding volume or bounding space) defined by a volume enclosed by a portion of an outer bounding surface of the sphere of radius r having bounding surface sides of radius r, a vertex of which is centred at the user 1010. For ease of illustration and explanation, Fig. 10 illustrates equipment located within the field of view of 1012 of the AR glasses worn by the user 1010 and within a maximum radius r from the user to be defined as equipment proximate to the user 1010, however the scope of the present embodiment covers equipment that are proximate to the spatial position of the user, such as equipment located within 2D or 3D bounding spaces of any shape and size as previously discussed in conjunction with other embodiments. Fig. 10 also illustrates an equipment 1014 having a portion 1016 located proximate to the user and a portion 1018 located not proximate to the user. In addition, the equipment 1002 is associated with two linked (i.e., selectable) virtual objects 1020, 1022, equipment 1006 is associated with a linked (i.e., selectable) virtual object 1024, and equipment 1008 is associated with a linked (i.e., selectable) virtual object 1026.

When the number of virtual objects linked to respective secondary virtual objects to be displayed to the user is greater than a number of colours of the predefined colour set, the executable program logic, according to another embodiment, is configured to assign a colour to and to display only those virtual objects to which a unique colour is assigned, whereby the colour assignment is performed e.g. as a function of a distance ranking of the linked virtual objects. For example, in one embodiment, the executable program logic is configured to dynamically determine distances from the user to each of equipment having corresponding selectable virtual objects and assign a priority for display of the corresponding selectable virtual objects based on the determined distances. So in case the predefined color set comprises four colors "red", "green", "blue" and "yellow" while the number of virtual objects in the current bounding space of the user comprises five virtual objects, the four colours are assigned to the virtual objects in accordance with the distance of the virtual objects to the user. The virtual object within the bounding space being farthest away from the user will not be assigned any colour, because there are more virtual objects to be displayed than there exist colours in the predefined colour set. As a consequence, the virtual object within the bounding space being farthest away from the user will not be displayed and hence will not be selectable via a voice command being indicative of one of the predefined colours.

According to embodiments, the creation of the predefined colour sets comprises creating a mapping, e.g., a mapping file or mapping entry in a database, whereby the mapping assigns each of the predefined colours to a voice command being indicative of the respective colour. The creation of the predefined colour set can pe performed e.g. upon initialization or instantiation of the executable program logic, or upon a log-in of the user 1010. When the colours are dynamically assigned to the virtual objects to be displayed, the mapping is updated such that an identifier of the virtual object (or an ID of the equipment represented by the virtual object) is stored in association with the colour which was assigned to this virtual object, thereby enabling the executable program logic to identify the virtual object selected via a voice command by analysing the mapping. When the user 1010 and/or the equipment to which the virtual objects representing said equipment may be anchored change position relative to each other, the mapping is updated.

For example, if the user moves so that one or more additional virtual objects are now contained in the bounding space and/or so that one or more of the previously displayed virtual objects are now outside the bunding space, the colours are reassigned and, if necessary, additional virtual objects are displayed provided each of the virtual objects to be displayed was assigned one of the colours of the predefined colour set and/or previously displayed objects are no longer displayed.

In an embodiment, the executable program logic is configured to assign a higher priority for display of the corresponding selectable virtual objects for smaller determined distances. In an embodiment, for example, and as illustrated, the program logic assigns the virtual object 1024 a highest display priority, virtual object 1026 the next highest display priority and virtual objects 1020 and 1022 the lowest display priorities, based on r2 < r3 < r4. Thus, if the predefined colour set has only two distinct colours, then the executable program logic assigns a first distinct colour to the virtual object 1024, assigns a second distinct colour to the virtual object 1026, and only displays selectable virtual objects 1024 and 1026. Selectable virtual objects 1020 and 1022 are not displayed. However, if for example, the predefined colour set has three distinct colours, then the executable program logic assigns a first distinct colour to the virtual object 1024, assigns a second distinct colour to the virtual object 1026, and assigns a third distinct colour one of the virtual object 1020 and 1022, only then only displays selectable virtual objects 1024, 1026 and the one selectable virtual object of virtual objects 1020 and 1022 that has been assigned a distinct colour.

When the number of virtual objects linked to respective secondary virtual objects is less than or equal to the number of colours of the predefined colour set, the executable program logic is configured to assign a distinct colour selected from the predefined colour set to each selectable virtual object and display each of the selectable, distinctly coloured, virtual objects to the user via the AR glasses.

When the user changes spatial position and/or when line-of-sight of the AR glasses changes, due to for example a motion of the uses head, and/or when the eye orientation of the user looking through the AR glasses changes, then some of the presently displayed selectable coloured virtual objects disappear from view through the AR glasses and new virtual objects, which are associated with new equipment that are newly proximate to the user, are assigned colours by the program logic, where the new colours are selected from the colours previously assigned to the virtual objects that are no longer in proximity to the user (i.e., disappeared from view) and/or other non-used colours still available from the predefined set of colours. The program logic continuously updates which of the selectable virtual objects that are associated with equipment in proximity to the user, which also continuously changes because of user motion (i.e., body, head and/or eye motion), are assigned colours and displayed based upon updated distances of the corresponding equipment from the spatial position of the user.

The program logic advantageously updates the selectable virtual objects to be assigned distinct colours and to be displayed to the user via the AR glasses based upon a dynamically changing distance that the corresponding equipment are from the spatial position of the user, thereby only showing the selectable virtual objects based on the relevancy of proximity to the user, and without inundating the user with too much information.

In another embodiment, the executable program logic is configured to dynamically assign a colour to each virtual object linked to a respective secondary virtual object and display each virtual object linked to the respective secondary virtual object with the dynamically assigned colour.

In yet further embodiments, the executable program logic displays only those virtual objects linked to the respective secondary virtual object with the dynamically assigned colours that are associated with equipment that are proximate to the spatial position of the user, which is the present up-to-date spatial position of the user. For example, equipment that are proximate to the spatial position of the user include equipment within the field of view of the user wearing the AR glasses, or within the field of view as limited by a user-defined or predefined maximum distance from the user, or within a bounding space proximate to the user, or of equipment that are located in proximity to the spatial position of the user and other equipment not necessarily located in proximity to the user, but are included when the role of the user of the AR glasses enables the user to view virtual objects associated with equipment located in different rooms and/or on different floors of the plant. The field of view of a user wearing the AR glasses, the user-defined or predefined maximum distance from the user, the bounding space proximate to the user, and user role in filtering the equipment deemed to be located "in proximity to" the spatial position of the user has been previously discussed in the present application.

In a further embodiment, the executable program logic is configured to dynamically assign a colour to each virtual object displayed to the user via the AR glasses linked to a respective secondary virtual object based on the data type or equipment associated with each virtual object. As discussed briefly above, a colour may be assigned to a virtual object dependent upon the data type represented by the virtual object. In one embodiment, the executable program logic is configured to dynamically assign one of a primary colour and/or a secondary colour and/or a tertiary colour to each virtual object linked to a respective secondary virtual object, where each virtual object is assigned a different colour. The primary colours are red, yellow, and blue, the secondary colours result from mixing two primary colours, and include orange (red + yellow), green (blue + yellow) and purple (red + blue), and the tertiary colours result from mixing a primary colour and a secondary colour, and include vermillion (red + orange), Amber (yellow + orange), chartreuse (yellow + green), teal (blue +green), violet (blue + purple), and magenta (red + purple). In other embodiments, the executable program logic is configured to dynamically assign one of red, green, blue and yellow, and optionally including black and white. By dynamically assigning colours as described above, and in particular a primary colour, or a primary colour and one or more of the secondary colours, and optionally black and/or white, the augmented reality system, when implemented as a hands-free voice selection of a coloured virtual object, a described in more detail further below, advantageously does not have to be trained on a user's voice, since selecting a particular virtual object by saying the colour of the virtual object involves recognition of only a simple, single word. Furthermore, in a further embodiment, the user says the name of the colour of the virtual object in English. Thus, augmented reality system can advantageously be utilized world-wide by users of different mother tongues other than English, since colours are universally identifiable and most non-English speakers know the English words for at least the basic colours (e.g., primary colours plus one or more secondary colours) plus the colours "black" and "white," or can easily learn the English names for these colours given the simplicity of pronunciation and/or the easy access to translational software.

By way of an exemplary non-limiting embodiment, the executable program logic dynamically assigns colours, such as blue, green, red and yellow, where the blue is predefined to be assigned to a virtual object representing text data, green is predefined to be assigned to a virtual object representing image data, yellow is predefined to be assigned to a virtual object representing video data, and red is predefined to be assigned to a virtual object representing text data. For example, as the linked virtual objects that are displayed change because of the movement of the user (e.g., movement of the head of the user wearing the AR glasses from a first line-of-sight to a second line-of-sight, the movement of the eyes of the user wearing the AR glasses from a first eye orientation to a second eye orientation, and/or the movement of the spatial position of the user from a first spatial position to a second spatial position), the executable program logic dynamically assigns colours to virtual objects that are newly displayed to the user via the AR glasses, based upon the data type of the newly displayed virtual object.

In another embodiment, if two or more virtual objects represent the same data type, for example, video data, the executable program logic assigns yellow to each of the two or more virtual objects. The AR glasses are configured to recognize, via for example, voice recognition software (e.g., any commercially available voice recognition app) stored in a local memory of the AR glasses and executed by one or processing units of the AR glasses, a hands-free voice selection of a coloured virtual object, by saying the colour of the virtual object in combination with a position of the displayed virtual object in the AR glasses as seen by the user, e.g., saying "yellow right" to voice-select the yellow virtual object positioned the furthest to the right in the AR glasses, "yellow left" to voice-select the yellow virtual object positioned the furthest to the left in the AR glasses, "yellow center" to voice-select the yellow virtual object positioned between "yellow left" and "yellow right" virtual objects, "yellow center right" to voice-select the yellow virtual object positioned between the "yellow-center" and "yellow right" virtual objects, and yellow center left" to voice-select the yellow virtual object positioned between the "yellow-center" and "yellow left" virtual objects.

In a further embodiment, the executable program logic is configured to dynamically assign a colour to each virtual object displayed to the user via the AR glasses linked to a respective secondary virtual object based on the respective equipment associated with each virtual object. For example, the executable program logic is configured to dynamically assign: a first colour to each of the virtual objects (displayed to the user via the AR glasses that are linked to respective secondary virtual objects) associated with a respective equipment proximate to the user, and displayed in proximity or on the respective equipment; a second colour to each of the virtual objects (displayed to the user via the AR glasses that are linked to respective secondary virtual objects) associated with a second respective equipment proximate to the user, and displayed in proximity or on the second respective equipment; and third, fourth ... and nth colours to third, fourth ... and nth sets of virtual objects associated with respective third, fourth, ... and nth equipment proximate to the user.

This may be a good heuristic to ensure the virtual objects being proximate to a user in the context of an automated production line will have assigned different colours. For example, in some embodiments, each production line may comprise a set of multiple different equipment and the manufacturing plant may comprise multiple production lines having the same structure and components. In this case, assigning different colours to different equipment types may already ensure that the virtual objects to be displayed in the field of view/bounding space will have different colours.

In a further embodiment, if more than one virtual object (displayed to the user via the AR glasses that are linked to respective secondary virtual objects) are associated with a respective equipment proximate to the user, the executable program logic is configured to dynamically assign a combination of colour and different number to each of the two or more virtual objects associated with the respective equipment. For example, three virtual objects displayed to the user via the AR glasses and associated with a first respective equipment are assigned the colour red, with the first red virtual object assigned the number 1, the second red virtual object assigned the number 2, and the third red virtual object assigned the number 3, and two virtual objects displayed to the user via the AR glasses and associated with a second respective equipment are assigned the colour green, with the first green virtual object assigned the number 1 and the second green virtual object assigned the number 2. The AR glasses are configured to recognize, via for example, voice recognition software (e.g., any commercially available voice recognition app) stored in a local memory of the AR glasses and executed by one or processing units of the AR glasses, a hands-free voice selection of a coloured numbered virtual object, by saying the colour and number of the virtual object as seen by the user via the AR glasses, e.g., saying "red two" to voice-select the red virtual object labelled 2 and saying "green one" to voice-select the green virtual object labelled 1.

In another embodiment, the hands-free selection comprises a voice selection of a virtual object (i.e., a linked virtual object). For example, as discussed above, if the user of the AR glasses wishes to select a linked virtual object that is yellow, the user simply says the word "yellow." The user of the AR glasses says the colour of the linked virtual object which the user wishes to select. The user may wish to select any particular linked virtual object to obtain more information related to the linked virtual object via a subsequent display of the respective secondary virtual object linked to the selected virtual object.

In one embodiment, the augmented reality glasses and/or the positioning system includes a voice detection unit configured to detect the voice selection and convert the voice selection into the signal indicating the hands-free selection, by the user, of the virtual object. The voice detection unit includes one or more acoustic sensors and voice recognition software, such as any commercially available voice recognition software app. The voice recognition software may be stored in a local memory of the AR glasses and/or positioning system and executed by one or processing units of the AR glasses and/or positioning systems.

In another embodiment, the user of the AR glasses expresses the voice selection in English. However, the scope of the present disclosure includes additional and/or alternate embodiments in which the voice recognition software recognizes two or more additional languages, such as German, French, Spanish, Italian, Russian, Japanese and/ or Korean, by way of non-limiting examples, and translates the colour selected via the voice selection in a language other than English, and in converts the voice selection into the signal indicating the hands-free selection, by the user, of the linked virtual object.

In yet an additional embodiment, the hands-free selection includes a gaze selection of a virtual object linked to a respective secondary virtual object, also referred to as selection of a selectable virtual object or a linked virtual object. For example, in one non-limiting exemplary embodiment, the AR glasses and/or the positioning system includes one or more directional sensors configured to detect a line of sight of the AR glasses or an eye orientation of the user wearing the AR glasses. Detection of a line-of-sight of the AR glasses and eye orientation of a user wearing the AR glasses has been previously discussed above in conjunction with other embodiments, which are incorporated in the present embodiment of gaze selection. Furthermore, the AR glasses and/or the positioning system are configured, via processing units and executable software, to determine a first length of time the line of sight of the augmented reality glasses is fixed on the selectable virtual object or a second length of time the eye orientation of the user wearing the augmented reality glasses is fixed on selectable virtual object, and if either the first length of time or the second length of time is greater than a predefined maximum gaze duration, generate a signal indicating the hands-free selection, by the user, of the selectable virtual object.

Gaze selection of a selectable virtual object is advantageous in noisy plant environments and/or when a non-English speaker does not know the English words for particular colours, directions (i.e., left, right, centre), or numbers (e.g., one, two ... nine, ten) and/or when multiple virtual objects have the same colour or the same colour-number combination or the occupy the same relative position in the display of the AR glasses.

In another embodiment, the executable logic is configured to display, via the augmented reality glasses, a respective secondary virtual object by replacing the hands-free selection, by the user, of the displayed virtual object linked to the respective secondary virtual object with the secondary virtual object. By replacing the display of the selected virtual object with a display of its respective secondary virtual object, to which it is linked, advantageously prevents the display of too many virtual objects that could clutter the view of the equipment in the plant through the AR glasses.

In another embodiment, at least some of the virtual objects are graphical representations of a respective one of the equipment associated with the corresponding virtual object. According to aspects of the embodiment, a graphical representation may include an image-based illustration and/or a video-based illustration of the one equipment.

Fig. 11 illustrates a flow chart of a method for controlling an automation system for controlling an automated production process of an industrial plant, according to an embodiment of the present disclosure. For example, the method can be performed based on the automation system depicted in Figure 1A. The industrial plant includes a plurality of equipment 122, 124 for performing the production process. The plurality of equipment may be spatially distributed in the industrial plant. One or more equipment of the plurality of equipment are associated with one or more corresponding virtual objects. The automation system includes an augmented reality system 101 including augmented reality glasses 104 and executable program logic 106 coupled to the augmented reality glasses

In step 1102, the executable program logic receives a spatial position (e.g., an up-to-date spatial position) of a user wearing the augmented reality glasses from a positioning system 108. The position information may be received via a network 107 as depicted in Figure 1A. In other embodiments, the program logic 106 and the positioning system 108 may be integral components of the AR glasses and the position information of the user may be received via a local interface, e.g., a bus.

In step 1104, the executable program logic displays, via the augmented reality glasses, one or more virtual objects associated with one or more equipment proximate to the spatial position of the user. At least one of the virtual objects are linked to at least one respective secondary virtual object. In one embodiment, the respective secondary virtual object is stored in a database system, such as database system 102.

In step 1106, the executable program logic receives, from the augmented reality glasses, a signal indicating a hands-free selection, by the user, of a virtual object linked to a respective secondary virtual object.

In step 1108, the executable program logic displays, via the augmented reality glasses, the respective secondary virtual object and/or triggers an action associated with the selected virtual object.

Aspects of the present disclosure are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

Embodiments of the present disclosure may be a system, a method, a product, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire.

## Claims

1. An automation system (100) for controlling an automated production process of an industrial plant, the industrial plant including a plurality of equipment (122, 124) for performing the production process, the plurality of equipment being spatially distributed in the industrial plant, each equipment of the plurality of equipment associated with one or more corresponding virtual objects, the automation system comprising:
an augmented reality system (101), including:
- augmented reality glasses (104); and
- executable program logic (106) coupled to the augmented reality glasses, the executable program logic configured to:
• receive a spatial position of a user wearing the augmented reality glasses from a positioning system (108),
• display, via the augmented reality glasses, one or more virtual objects associated with one or more equipment proximate to the spatial position of the user, wherein at least one of the one or more virtual objects are linked to at least one respective secondary virtual object, the at least one respective secondary virtual object stored in a database system (102),
• receive, from the augmented reality glasses, a signal indicating a hands-free selection, by the user, of a virtual object linked to a respective secondary virtual object, and
• display, via the augmented reality glasses, the respective secondary virtual object and/or trigger an action associated with the selected virtual object.

2. The automation system of claim 1, wherein the executable program logic is further configured to:
determine a number of the at least one virtual object linked to the at least one respective secondary virtual object and associated with one or more equipment proximate to the spatial position of the user,
dynamically assign a distinct colour from a predefined colour set of colours to each virtual object linked to respective secondary virtual objects and display each virtual object linked to respective secondary virtual objects with the dynamically assigned distinct colour, and
if the number of virtual objects linked to respective secondary virtual objects is greater than a number of colours of the predefined colour set, then display only those virtual objects linked to respective secondary virtual objects that are assigned distinct colours.

3. The automation system of claim 2, wherein if the number of virtual objects linked to respective secondary virtual objects is greater than the number of colours of the predefined colour set, the executable program logic is further configured to:
dynamically determine distances from the user to each of the one or more equipment proximate to the spatial position of the user and associated with the at least one virtual object linked to the at least one respective secondary virtual object, and
assign a display priority to each of the at least one virtual object linked to the at least one respective secondary virtual object based on the determined distances, wherein
dynamically assign a distinct colour further comprises dynamically assign a distinct colour from the predefined colour set of colours to each virtual object of a second number of virtual objects based on display priority, the second number equal to the number of colours.

4. The automation system of claim 1, wherein the executable program logic is further configured to dynamically assign a colour to each virtual object of the at least one virtual object linked to the at least one respective secondary virtual object and display each virtual object of the at least one virtual object linked to the at least one respective secondary virtual object with the dynamically assigned colour.

5. The automation system of claims 2 or 4, wherein each virtual object of the at least one virtual object linked to the at least one secondary virtual object represents data of a data type, and wherein the executable program logic is configured to dynamically assign the colour to each virtual object of the at least one virtual object linked to the at least one respective secondary virtual object based on the data type and/or equipment associated with each virtual object.

6. The automation system of claim 5, wherein the data type comprises one of: text data, image data, video data, audio data and alarm data.

7. The automaton system of claims 5 or 6, wherein each secondary virtual object of the at least one secondary virtual object linked to the at least one virtual object comprises data of the data type represented by the at least one virtual object.

8. The automation system of any one of claims 4-7, wherein the executable program logic is configured to dynamically assign one of a primary colour and/or a secondary colour and/or a tertiary colour to each virtual object of the at least one virtual object linked to the at least one respective secondary virtual object, wherein each virtual object is assigned a different colour.

9. The automation system of any one of claims 4-8, wherein the hands-free selection comprises a voice selection of the virtual object, and wherein the augmented reality glasses and/or the positioning system includes a voice detection unit configured to detect the voice selection and convert the voice selection into the signal indicating the hands-free selection, by the user, of the virtual object.

10. The automation system of claim 9, wherein the voice selection comprises a colour selection.

11. The automation system of any one of claims 9-10, wherein the voice selection is expressed in English.

12. The automation system of any one of claims 4-8, wherein the hands-free selection comprises a gaze selection of the virtual object.

13. The automation system of any one of claim 12, wherein the augmented reality glasses and/or the positioning system includes one or more directional sensors configured to detect a line of sight of the augmented reality glasses or an eye orientation of the user wearing the augmented reality glasses, determine a first length of time the line of sight of the augmented reality glasses is fixed on the virtual object or a second length of time the eye orientation of the user wearing the augmented reality glasses is fixed on the virtual object, and if either the first length of time or the second length of time is greater than a predefined maximum gaze duration, generate the signal indicating the hands-free selection, by the user, of the virtual object.

14. The automation system of any one of the previous claims, wherein the executable logic is configured to display, via the augmented reality glasses, the respective secondary virtual object by replacing the displayed virtual object linked to the secondary virtual object with the secondary virtual object.

15. The automation system of any one of the previous claims, wherein at least some of the virtual objects are graphical representations of a respective one of the equipment associated with the corresponding virtual object, wherein a graphical representation comprises an image-based illustration and/or a video-based illustration of the one equipment.

16. The automation system of any one of the previous claims, wherein the one or more equipment proximate to the spatial position of the user comprise equipment in the field of view of the user wearing the AR glasses.

17. The automation system of any one of the previous claims, wherein the virtual objects represent data enabling the user to operate and/or maintain the plurality of equipment.

18. A method for controlling an automation system (100) for controlling an automated production process of an industrial plant, the industrial plant including a plurality of equipment (122, 124) for performing the production process, the plurality of equipment being spatially distributed in the industrial plant, each equipment of the plurality of equipment associated with one or more corresponding virtual objects, the automation system comprising an augmented reality system (101) including augmented reality glasses (104) and executable program logic (106) coupled to the augmented reality glasses, the method comprising:
receiving, by the executable program logic, a spatial position of a user wearing the augmented reality glasses from a positioning system (108),
displaying, via the augmented reality glasses, one or more virtual objects associated with one or more equipment proximate to the spatial position of the user, wherein at least one of the one or more virtual objects are linked to at least one respective secondary virtual object, the at least one respective secondary virtual object stored in a database system (102),
receiving, from the augmented reality glasses, a signal indicating a hands-free selection, by the user, of a virtual object linked to a respective secondary virtual object, and
displaying, via the augmented reality glasses, the respective secondary virtual object and/or triggering an action associated with the selected virtual object.

19. The method of claim 18, further comprising:
determining, by the executable program logic, a number of the at least one virtual object linked to the at least one respective secondary virtual object and associated with one or more equipment proximate to the spatial position of the user,
dynamically assigning a distinct colour from a predefined colour set of colours to each virtual object linked to respective secondary virtual objects and displaying each virtual object linked to respective secondary virtual objects with the dynamically assigned distinct colour, and
if the number of virtual objects linked to respective secondary virtual objects is greater than a number of colours of the predefined colour set, then displaying only those virtual objects linked to respective secondary virtual objects that are assigned distinct colours.

20. The automation system of any one of claims 1- 17, wherein the triggered action comprises one or more actions selected from a group comprising:
∘ sending a command to the one of the equipment associated with the selected virtual object, the command causing the equipment to start, stop or change its operation;
∘ activating a command interpreter for voice commands, whereby the command interpreter is configured to process and interpret voice commands for controlling the equipment associated with the selected virtual object in accordance with a list of commands specified in the selected virtual object;
∘ disabling at least one other command interpreter configured to process and interpret voice commands in accordance with a list of commands specified in a non-selected virtual object.
